(19) Europäisches Patentamt
European Patent Office
Office européen des brevets

(11) **EP 4 759 709 A1**

(12) **EUROPEAN PATENT APPLICATION**
published in accordance with Art. 153(4) EPC

(43) Date of publication:
**17.06.2026 Bulletin 2026/25**

(21) Application number: **24850767.5**

(22) Date of filing: **17.07.2024**

(51) International Patent Classification (IPC):
***B64C 27/08*** (2023.01)

(52) Cooperative Patent Classification (CPC):
**B64C 27/08**

(86) International application number:
**PCT/CN2024/105925**

(87) International publication number:
**WO 2025/031117 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 10.08.2023  CN 202311007534
12.04.2024  CN 202410441781
07.05.2024  CN 202410574348

(71) Applicant: **Wisson Technology (Shenzhen)
Limited
Shenzhen, Guangdong 518049 (CN)**

(72) Inventors:
• **LI, Mingzhao
Shenzhen, Guangdong 518049 (CN)**
• **CHEN, Xiulin
Shenzhen, Guangdong 518049 (CN)**
• **TAN, Wenyuan
Shenzhen, Guangdong 518049 (CN)**
• **LIU, Beineng
Shenzhen, Guangdong 518049 (CN)**

(74) Representative: **Pfenning, Meinig & Partner mbB
Patent- und Rechtsanwälte
Theresienhöhe 11a
80339 München (DE)**

(54) **AERIAL OPERATION SYSTEM**

(57) An aerial operation system, comprising: an aerial vehicle (10), an aerial operation device (30), and a dynamic disturbance adjusting mechanism (20) provided between the aerial vehicle (10) and the aerial operation device (30). The dynamic disturbance adjusting mechanism (20) is configured to adjust the dynamic disturbance of the aerial operation device (30), and the dynamic disturbance is generated due to a relative position change between a first center of mass of the aerial operation device (30) and a second center of mass of the aerial vehicle (10).

**FIG. 1**

## Description

### Cross-Reference to Related Applications

The present disclosure is based on Chinese applications with application number 202311007534.2, filed on August 10, 2023, application number 202410441781.1, filed on April 12, 2024, and application number 202410574348.5, filed on May 7, 2024, and claims priority to the aforementioned Chinese applications. The disclosed contents of the above-mentioned Chinese applications are hereby introduced into the present disclosure as a whole.

### Technical Field

The present disclosure relates to the technical field of flying devices, and in particular, to an aerial operation system.

### Background

With the development of unmanned aircraft technology, after loading an operation unit onto an unmanned aircraft, high-elevation aerial operations can be performed. For example: an unmanned aircraft carrying a probe or camera and other execution components can perform aerial detection operations on high-elevation objects, or an unmanned aircraft carrying a spraying device can perform high-elevation spraying operations.

However, after an unmanned aircraft carries an operation unit, if the position of the center of mass of the entire device is not properly adjusted, it will affect the flight control of the unmanned aircraft. Furthermore, due to an unstable center of mass during aerial operations, the entire device cannot perform stable aerial operations.

### Summary

An objective of the embodiments of the present disclosure is to provide an aerial operation system, which, during aerial operations, can adjust the linkage state of the aerial operation device through a dynamic disturbance adjustment mechanism, to reduce the impact of dynamic disturbance on the flight control of the aircraft and avoid the problem of unstable center of gravity of the entire device and inability to perform stable aerial operations.

To achieve the above objective, the present disclosure provides an aerial operation system, comprising: an aircraft; an aerial operation device; and a dynamic disturbance adjustment mechanism provided between the aircraft and the aerial operation device; wherein the dynamic disturbance adjustment mechanism is configured to adjust dynamic disturbance of the aerial operation device, and the dynamic disturbance is generated due to a relative position change between a first center of mass of the aerial operation device and a second center of mass of the aircraft.

In some embodiments, the aerial operation device includes a stationary state and an adjustment state; in the stationary state, the first center of mass is disposed close to the second center of mass of the aircraft; in the adjustment state, the dynamic disturbance of the aerial operation device is adjusted by the dynamic disturbance adjustment mechanism;

wherein the aerial operation system is configured such that:

in the stationary state, a middle portion of the aerial operation device is fixedly provided on a belly mounting area of the aircraft via the dynamic disturbance adjustment mechanism, so that the first center of mass is disposed close to the second center of mass of the aircraft, an operation end of the aerial operation device extends beyond a rotor coverage range of the aircraft, and a non-operation end opposite to the operation end of the aerial operation device achieves gravitational balance with the operation end through a lever principle, to prevent the first center of mass from moving away from the second center of mass and affecting the flight control of the aircraft;

in the adjustment state, when the aircraft flies in linkage with the aerial operation device, a relative position change between the first center of mass and the second center of mass is caused, thus generating the dynamic disturbance, and the dynamic disturbance adjustment mechanism can adjust a linkage state of the aerial operation device to reduce the impact of the dynamic disturbance on the flight control of the aircraft; and/or, when the aircraft hovers and the aerial operation device performs an operation, a reverse force in the operation direction can be generated, affecting the flight control of the aircraft, and the dynamic disturbance adjustment mechanism can adjust the transmission degree of the reverse force, thereby achieving stable aerial operation of the aerial operation system.

In some embodiments, the aerial operation system is configured such that, in the stationary state, the first center of mass and the second center of mass are located on the same longitudinal axis.

In some embodiments, the dynamic disturbance adjustment mechanism includes:

a first end plate, connected to the aircraft;

a second end plate, connected to the middle portion of the aerial operation device;

a fluid actuator, with two ends respectively connected to the first end plate and the second end plate; and

a rotational support structure, connected between the first end plate and the second end plate;

wherein the dynamic disturbance adjustment mechanism is configured such that:

when the aircraft flies in linkage with the aerial operation device, based on an external pressure borne by the fluid actuator, an internal air pressure of the fluid actuator can be accordingly adjusted to maintain a balanced state between the aerial operation device and the aircraft, thereby reducing the dynamic disturbance; wherein the external pressure is an inertial pressure generated by the aerial operation device on the second end plate due to the dynamic disturbance; and/or,

when the aircraft hovers and the aerial operation device performs an operation, based on a passive compliance of the fluid actuator itself, the reverse force in the operation direction is passively absorbed.

In some embodiments, the fluid actuator is a stacked structure fluid actuator; the stacked structure fluid actuator includes two end faces, a flexible side wall and a drive source interface, the flexible side wall and the two end faces enclose to form a tubular cavity having a central axis, the flexible side wall is designed as or includes a strain-uniformly-distributed stacked structure capable of extending/contracting and/or bending along the direction of the central axis, the strain-uniformly-distributed stacked structure is formed by stacking two or more strain-uniformly-distributed stacked layers along the central axis, so that strain of the entire flexible side wall is uniformly distributed among the respective strain-uniformly-distributed stacked layers, the strain-uniformly-distributed stacked layer is designed as or includes a strain unit having a folding face and a crease, based on a combination of shape, thickness, and stacking manner of the strain unit, during a process of the flexible side wall extending/contracting and/or bending along the direction of the central axis, strain of the strain unit is uniformly distributed among the respective folding faces and not concentrated at the creases, the drive source interface is provided on the flexible side wall or on an end face, and is used to change a pressure difference between inside and outside of the cavity and cause the strain-uniformly-distributed stacked structure to compress or extend to drive the end face of the stacked structure fluid actuator to move, the strain-uniformly-distributed stacked layer is formed by enclosing a single folding face, a connection between folding faces of two adjacent strain-uniformly-distributed stacked layers forms a crease, the crease is located in a crease plane perpendicular to the central axis, and in an initial state the crease plane is planar;

the strain unit has an intrusion angle $\theta$, an intrusion depth coefficient a, a folding face width l and a wall thickness t, wherein the intrusion angle $\theta$, the intrusion depth coefficient a, the folding face width l and the wall thickness t are all defined based on a cross-section of the strain unit cut by an S-plane, the intrusion angle $\theta$ is an angle between the folding face and an adjacent crease plane, the intrusion angle $\theta$ varies with compression or extension of the strain-uniformly-distributed stacked structure, the folding face width 1 is a width of the folding face from a radial outer side of a protruding crease to a radial inner side of a recessed crease, a projection of the folding face width l in a direction perpendicular to the central axis is defined as an intrusion depth v, the intrusion depth coefficient a is a proportional relationship between the intrusion depth v and an equivalent radius R of the protruding crease, the wall thickness t is a thickness of the flexible side wall, the intrusion angle $\theta$, the intrusion depth coefficient a, the folding face width 1, and the wall thickness t are numerically interrelated and have a defined combination of values, such that during a deformation process of the stacked structure fluid actuator, the flexible side wall only undergoes folding and/or extending of the strain-uniformly-distributed stacked structure, and strain of the flexible side wall is uniformly distributed among the respective folding faces and not concentrated at the creases;

the strain unit has at least one basic shape appearing in an axial direction, and creases on adjacent crease planes have different convex-concave states on the flexible side wall, the protruding crease has a closed shape with curvature G1 continuity or curvature G2 continuity on a cross-section perpendicular to the central axis;

the stacked structure fluid actuator in an initial state has an initial intrusion angle $\theta p$ and an initial height Hp, and during a process of compression and/or extension within an effective working range of the strain-uniformly-distributed stacked structure, the intrusion angle $\theta$ varies between 0° and a maximum intrusion angle $\theta max$, a height H of the stacked structure fluid actuator varies between a minimum height Hmin and a maximum height Hmax, and the crease only moves along the central axis with the crease plane without deformation;

during a shortening process of the stacked structure fluid actuator, the folding face of each strain unit of the stacked structure fluid actuator deforms as a wavy shape on an S-plane cross-section, and the wavy shape of the folding face of each strain unit after deformation includes a wave peak and a wave trough.

In some embodiments, in order to optimize a compression ratio, shape stability, and service life of the stacked structure fluid actuator while ensuring uniform strain distribution within a single strain unit, a combination of values for the initial intrusion angle $\theta p$ and the intrusion coefficient a under different working conditions is limited by a value range of $\sigma k$ in an area change rate formula $\sigma k = a(1-\cos\theta p)/(2\cos\theta p-a)$ of the stacked structure fluid actuator, and on the S-plane, a point-to-point straight-line distance from a wave peak of the single strain unit to an outer end of the crease is greater than 0.251.

In some embodiments, within the effective working range, a pressure difference between inside the cavity of the stacked structure fluid actuator and an external environment varies due to variations in volume and/or pressure of a driving fluid and causes a volume change of the cavity of the stacked structure fluid actuator, wherein the volume change of the cavity is mainly reflected in extension/contraction and bending along the direction of the central axis, thereby driving relative movement of two ends of the stacked structure fluid actuator; when the pressure difference varies in a range of -0.1MPa to 0.2MPa, the minimum height of the stacked structure fluid actuator meets $0.2Hp < Hmin < 0.4Hp$, the maximum intrusion angle $\theta max < 45°$, and the maximum height $Hmax > 1.5Hp$, the stacked structure fluid actuator can have a service life of more than 3 million cycles of extension and contraction due to the strain-uniform distribution characteristic; when a working pressure difference range of the stacked structure fluid actuator is within -0.08Mpa to 0.2Mpa, $0.02 < \sigma k < 0.1$, $0.25 < a < 0.55$; a material for forming the flexible side wall satisfies: tensile strength greater than 12 MPa, Shore hardness greater than 80, resilience greater than 30%.

In some embodiments, the aerial operation device includes:

a first long rod;

a spraying execution assembly, provided at one end of the first long rod, the spraying execution assembly being used for performing a spraying operation on a high-elevation facade;

an electric control box, provided at the other end of the first long rod, the electric control box being used for installing an electrical control component for controlling operation of the spraying execution assembly and/or the dynamic disturbance adjustment mechanism, and the electric control box being provided with an accommodating cavity for accommodating a liquid storage pot, a top end of the electric control box being connected to the second end plate; and

a liquid storage pot, provided within the accommodating cavity, the liquid storage pot being connected to the spraying execution assembly via a connection tube.

In some embodiments, the spraying execution assembly includes a spraying head, a rigid variable bending flow channel, and a first rotation assembly, wherein the rigid variable bending flow channel is connected between the spraying head and the connection tube, and includes a first variable segment having a first inlet end and a first outlet end, wherein the first inlet end and the first outlet end are arranged at an angle, and the first rotation assembly is configured to drive the first variable segment to rotate, with a rotation axis parallel to an axis of the first inlet end.

In some embodiments, the first rotation assembly is provided on the electric control box or the first long rod, wherein the first rotation assembly connects the first inlet end and a terminal end of the connection tube via a first transmission member, thereby driving the first variable segment to rotate about the axis of the first inlet end; the first transmission member includes one of a pull cable, a belt, and a timing belt.

In some embodiments, the spraying execution assembly further includes a second rotation assembly; the rigid variable bending flow channel further includes a second variable segment having a second inlet end and a second outlet end, wherein the second inlet end and the second outlet end are arranged at an angle, the second rotation assembly is configured to drive the second variable segment to rotate, with a rotation axis parallel to an axis of the second inlet end;

the first inlet end is rotatably connected to the terminal end of the connection tube, the first outlet end is coaxially and rotatably connected to the second inlet end, and the second outlet end is connected to the spraying head.

In some embodiments, a rotation direction of the first rotation assembly is a vertical direction, and a rotation direction of the second rotation assembly is a horizontal direction;

or, the rotation direction of the first rotation assembly is the horizontal direction, and the rotation direction of the second rotation assembly is the vertical direction.

In some embodiments, the spraying execution assembly further includes a mounting base, wherein the mounting base is connected to the connection tube, and the terminal end of the connection tube passes through one end of the mounting base; wherein two ends of the first long rod are respectively connected to the electric control box and the mounting base; the mounting base has oppositely arranged fixed ends and a connection end connecting the two fixed ends, an installation space is formed between the two fixed ends, and the connection end is provided with a support portion located within the installation space;

the first rotation assembly includes a first servomotor, wherein the first inlet end and the terminal end of the connection tube are rotatably connected at the support portion, the first servomotor is provided on the fixed end away from the connection tube, and a rotation shaft of the first servomotor is coaxially arranged with the first inlet end; the first servomotor is connected to the electric control box via a first wire, which is laid along the first long rod and the mounting base, and the first servomotor is used to control the first variable segment to rotate in a perpendicular direction;

the fixed end provided with the first servomotor is further rotatably provided with a mounting frame, the mounting frame rotates following rotation of the first variable segment, wherein the first variable segment is fixedly connected to the mounting frame, the second variable segment is rotatably connected or in clearance fit with the mounting frame, the mounting frame has two angled internal cavities, each internal cavity respectively envelops different angled portions of the first variable segment;

the second rotation assembly includes a second servomotor, the second servomotor is connected to the mounting frame, and is connected to the electric control box via a second wire, the second wire is provided inside the first long rod, the mounting base, and the mounting frame, and the second servomotor is used to control rotation of the second variable segment, a rotation direction of the second variable segment is perpendicular to a rotation direction of the first variable segment;

the first rotation assembly includes a wire winding guard plate, which is provided at a position corresponding to the first servomotor, and provides a winding space for the first wire to prevent the first wire from interference and resulting in squeezing damage during rotation.

In some embodiments, the fixed end is provided with an arcuate positioning groove, the arcuate positioning groove is located on one side of the fixed end close to the installation space, wherein the mounting frame is provided with a positioning protrusion extending toward the arcuate positioning groove, and the wire winding guard plate is provided inside the fixed end between the first servomotor and the positioning protrusion.

In some embodiments, the electric control box further includes a first control module for controlling the first rotation assembly and/or the second rotation assembly to control an angle and relative position between the aircraft and the spraying head, and a second control module for controlling activation and deactivation of the spraying execution assembly, wherein the first control module is electrically connected to the first rotation assembly and/or the second rotation assembly, and the second control module is electrically connected to the spraying execution assembly;

wherein an interface for connecting to a power source and communication of the aircraft is further provided above the electric control box, and is connected to the electric control box via a wire, to enable convenient adaptation to the aircraft through mechanical, power supply, communication, and software control interfaces;

the electric control box is provided with an indicator light to display a connection status between the aerial operation system and a flight control system of the aircraft.

In some embodiments, the aerial operation system further includes a vision module provided on the electric control box, and the vision module is used for acquiring in real-time relative position information between a target spraying surface of an object to be sprayed and the aircraft, and transmitting the relative position information to the first control module and the second control module; the first control module controls the first rotation assembly and the second rotation assembly to rotate corresponding angles based on the relative position information, to move the spraying head to a preset position, and then the second control module activates the spraying execution assembly to spray the target spraying surface of the object to be sprayed; a mounting part is provided at a lens of the vision module, and a detachable lens protective sheet is arranged on the mounting part to prevent spray liquid droplets from contaminating the lens of the vision positioning module during a spraying operation.

In some embodiments, the spraying execution assembly includes a servomotor and a spraying head; the spraying head is provided at a bottom end of the servomotor, and the servomotor is used to control a spraying operation alignment angle of the spraying head.

In some embodiments, the aerial operation system is used for automatically spraying an object to be sprayed to cover all surfaces of the object to be sprayed, wherein at least one side surface of the object to be sprayed has an obstacle and at least one side surface of the object to be sprayed has no obstacle, and a distance between an obstacle located on any side surface of the object to be sprayed and the object to be sprayed is 0.5 m to 1 m.

In some embodiments, the aerial operation system is used for automatically spraying an object to be sprayed to cover all surfaces of the object to be sprayed, wherein only one side surface of the object to be sprayed has no obstacle;

and/or, a spraying distance of the spraying head is 0.5 m to 1 m, and a spray fan angle of the spraying head is 20° to 90°;

and/or, a straight-line distance between the spraying head and a blade of the aircraft is 0.5 m to 0.8 m;

or, the spraying head has an atomization function and an aperture of the spraying head is less than or equal to 1.5 mm, and a spray fan angle of the spraying head is 0° to 30°.

In some embodiments, a longitudinal axis of the accommodating cavity and a longitudinal axis of the dynamic disturbance adjustment mechanism are located on the same straight line.

In some embodiments, the first long rod is further provided with a plurality of suspension fixing members, wherein one end of the connection tube is connected to the liquid storage pot, and the other end of the connection tube sequentially passes through the plurality of suspension fixing members and is connected to the spraying execution assembly.

In some embodiments, the aerial operation device includes:

a second long rod, a middle portion of the second long rod being connected to the second end plate in the dynamic disturbance adjustment mechanism;

an execution component, provided at one end of the second long rod, the execution component being used for performing a contact-type operations on a high-elevation facade;

an electric control box, provided at the other end of the second long rod, the electric control box being used for installing an electrical control component for controlling operation of the execution component and/or the dynamic disturbance adjustment mechanism; and

an adaptive segment, connected between the second long rod and the execution component, the adaptive segment being capable of passively deforming to buffer a force exerted on the execution component at a moment of contact with the high-elevation facade, and being capable of changing a pose of the execution component relative to the second long rod to place the execution component at an angle adapted to the high-elevation facade; the adaptive segment includes an adaptive driving member, the adaptive driving member includes a first end wall, a second end wall, and a deformable flexible side wall connected between the first end wall and the second end wall, wherein the first end wall, the second end wall and the flexible side wall enclose to form an enclosed cavity for containing a fluid.

In some embodiments, the adaptive segment includes a fixed base fixedly connected to the second long rod, a movable base for mounting the execution component, and at least three adaptive driving members; a first end wall of each adaptive driving member being fixed to the fixed base, and a second end wall of each adaptive driving member being movably connected to the movable base.

In some embodiments, the fixed base includes a first fixed plate and a second fixed plate spaced apart, and a fixed column fixedly connecting the first fixed plate and the second fixed plate; the adaptive driving members are provided between the first fixed plate and the second fixed plate, and the first end walls of the adaptive driving members are fixed on and/or integrally formed with the first fixed plate; the adaptive segment further includes a plurality of connecting rods; one end of each connecting rod is fixedly connected to the second end wall of an adaptive driving member, and the other end of each connecting rod is universally connected to the movable base; the connecting rods pass through the second fixed plate and are universally connected to the second fixed plate;

first elastic members are sleeved on the connecting rods, wherein one end of each first elastic member abuts against a connection between a connecting rod and the fixed base, and the other end of each first elastic member abuts against a connection between the connecting rod and the movable base.

In some embodiments, the adaptive segment further includes a plurality of sensors, each sensor is one of an air pressure sensor, an angle sensor, and a displacement sensor; the plurality of sensors are used for respectively detecting parameter changes at different positions of the adaptive driving member or parameter changes of multiple adaptive driving members.

In some embodiments, the second long rod includes a first rod body and a second rod body, wherein one end of the first rod body is rotatably connected to one end of the second rod body, so that the second long rod has a folded state and an unfolded state; one end of the first rod body away from the second rod body is connected to the adaptive segment, and the second rod body is connected to the dynamic disturbance adjustment mechanism and the electric control box.

The beneficial effects of the flight operation device provided by the present disclosure are: by providing the dynamic disturbance adjustment mechanism, it is possible to reduce the impact on the flight control of the aircraft and the operation of the aerial operation device caused by dynamic disturbance generated due to a relative position change between the first center of mass of the aerial operation device and the second center of mass of the aircraft.

**Brief Description of the Drawings**

In order to more clearly illustrate the technical solutions in the embodiments of the present disclosure, the drawings used in the embodiments or the description of the prior art will be briefly introduced below. Obviously, the drawings in the following description are merely some embodiments of the present disclosure. For those of ordinary skill in the art, other drawings can be obtained based on these drawings without creative effort.

FIG. 1 is a schematic structural diagram of a first embodiment of an aerial operation system of the present disclosure;

FIG. 2 is a schematic structural diagram of the first embodiment of the aerial operation system of the present disclosure without an aircraft;

FIG. 3 is a schematic structural diagram of a dynamic disturbance adjustment mechanism in FIG. 2;

FIG. 4 is a schematic structural diagram of a second embodiment of the aerial operation system of the present disclosure without the aircraft;

FIG. 5 is a schematic structural diagram of a first embodiment of an adaptive segment of the present disclosure;

FIG. 6 is a schematic structural diagram of a second embodiment of the adaptive segment of the present disclosure;

FIG. 7 is a schematic structural diagram of an adaptive driving member shown in FIG. 6;

FIG. 8A to FIG. 8D are a front view, a sectional perspective view, and an S-plane cross-sectional view, respectively, of a stacked structure fluid actuator with a circular cross-section in an initial state according to one embodiment of the present disclosure;

FIG. 9A to FIG. 9B are a complete S-plane cross-sectional view and an S-plane cross-sectional view of a side wall portion, respectively, of the stacked structure fluid actuator or soft muscle when it is compressed to the shortest height according to one embodiment of the present disclosure.

FIG. 10 shows a schematic structural diagram of a third embodiment of the aerial operation system of the present disclosure;

FIG. 11 shows a schematic structural diagram from a first perspective of the third embodiment of the aerial operation system of the present disclosure without the aircraft;

FIG. 12 is a partial enlarged schematic structural diagram of FIG. 11;

FIG. 13 is a schematic structural diagram from the first perspective after omitting part of the mounting frame of FIG. 12;

FIG. 14 is a schematic structural diagram from a second perspective of the third embodiment of the aerial operation system of the present disclosure without the aircraft;

FIG. 15 is a partial enlarged schematic structural diagram of FIG. 14;

FIG. 16 is a schematic structural diagram from the second perspective after omitting part of the mounting frame of FIG. 12;

FIG. 17 shows a schematic diagram of a positional relationship in a vertical direction between an object to be sprayed and an obstacle;

FIG. 18 shows a schematic diagram of a positional relationship in a horizontal direction between the object to be sprayed and the obstacle.

**Description of reference numerals**

1, aerial operation system; 10, aircraft; 11, mounting part; 12, lens protective sheet; 13, indicator light; 100, interface; 101, first rod body; 102, second rod body; 20, dynamic disturbance adjustment mechanism; 30, aerial operation device; 21, first end plate; 22, second end plate; 23, fluid actuator; 24, rotational support structure; 31, first long rod; 31', second long rod; 311, suspension fixing member; 32, spraying execution assembly; 321, servomotor; 322, spraying head; 331, accommodating cavity; 332, liquid storage pot; 33, electric control box; 34, connection tube; 35, execution component; 36, adaptive segment; 360, adaptive driving member; 361, first end wall; 362, second end wall; 363, flexible side wall; 364, enclosed cavity; 365, fixed base; 3651, first fixed plate; 3652, second fixed plate; 3653, fixed column; 366, movable base; 367, connecting rod; 3671, first elastic member; 368, sensor; 37, rigid variable bending flow channel; 371, first variable segment; 3711, first inlet end; 3712, first outlet end; 372, second variable segment; 3721, second inlet end; 3722, second outlet end; 38, mounting base; 381, fixed end; 3810, arcuate positioning groove; 382, connection end; 383, support portion; 39, mounting frame; 391, positioning protrusion; 40, first rotation assembly; 41, first servomotor; 42, wire winding guard plate; 50, stacked structure fluid actuator; 51, end face; 52, flexible side wall; 53, drive source interface; 60, strain-uniformly-distributed stacked layer; 61, folding face; 62, crease; 63, crease plane; 70, vision module; 80, second rotation assembly; 800, second servomotor; 90, object to be sprayed; 91, obstacle.

**Detailed Description**

To make the objectives, technical solutions, and advantages of the present disclosure clearer, the following further describes the present disclosure in detail with reference to the accompanying drawings and embodiments. It should be understood that the specific embodiments described herein are only for explaining the present disclosure and are not intended to limit the present disclosure.

It should be noted that when an element is referred to as being "fixed to" or "provided on" another element, it can be directly or indirectly on the other element. When an element is referred to as being "connected to" another element, it can be directly or indirectly connected to the other element.

Furthermore, the terms "first", "second" are used for descriptive purposes only and are not to be construed as indicating or implying relative importance or implicitly specifying the number of indicated technical features. Thus, a feature defined with "first", "second" may explicitly or implicitly include one or more of the features. In the description of the present disclosure, "a plurality of" means two or more unless otherwise specifically defined.

References to "one embodiment", "some embodiments", or "an embodiment" in the present disclosure mean that a specific feature, structure, or characteristic described in connection with the embodiment is included in one or more embodiments of the present disclosure. Therefore, the phrases "in one embodiment", "in some embodiments", "in other some embodiments", "in other embodiments", etc., appearing in different places in this specification are not necessarily all referring to the same embodiment, but mean "one or more but not all embodiments" unless otherwise specifically emphasized. Furthermore, the specific features, structures, or characteristics may be combined in any suitable manner in one or more embodiments.

To make the objectives, technical solutions, and advantages of the present disclosure clearer, the following further describes the present disclosure in detail with reference to the accompanying drawings and embodiments.

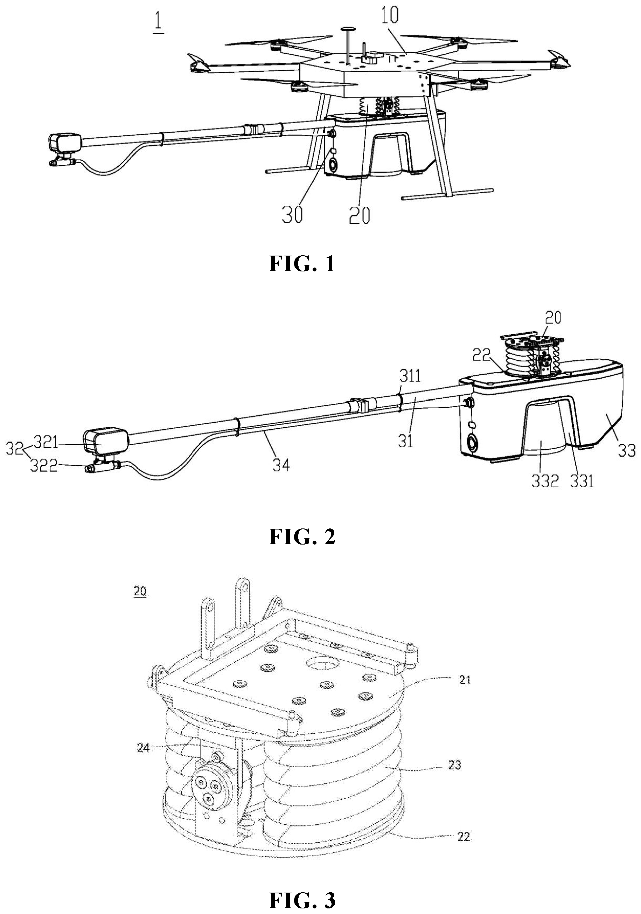

Please refer to FIG. 1 to FIG. 2 together for a description of the aerial operation system provided by the embodiments of the present disclosure. This aerial operation system is mainly used for performing operations such as surface detection, liquid spraying, etc., on high-elevation objects. High-elevation objects can be building facades, wind turbine blades, photovoltaic panels, etc.

Referring to FIG. 1 to FIG. 2, the aerial operation system 1 includes an aircraft 10, an aerial operation device 30, and a dynamic disturbance adjustment mechanism 20 provided between the aircraft 10 and the aerial operation device 30. The dynamic disturbance adjustment mechanism 20 is configured to adjust dynamic disturbance of the aerial operation device 30. The dynamic disturbance is generated due to a relative position change between a first center of mass of the aerial operation device 30 and a second center of mass of the aircraft 10. Thereby, it is possible to avoid the impact of dynamic disturbance generated due to a relative position change between the first center of mass of the aerial operation device and the second center of mass of the aircraft on the flight control of the aircraft and the operation of the aerial operation device.

In some embodiments, the aerial operation device 30 includes a stationary state and an adjustment state: in the stationary state, the first center of mass of the aerial operation device 30 is disposed close to the second center of mass of the aircraft 10, and in the adjustment state, the dynamic disturbance of the aerial operation device is adjusted by the dynamic disturbance adjustment mechanism; the dynamic disturbance is generated due to a relative position change between the first center of mass and the second center of mass.

Wherein, the aerial operation system is configured such that:

in the stationary state, a middle portion of the aerial operation device 30 is fixedly provided on a belly mounting area of the aircraft 10 via the dynamic disturbance adjustment mechanism 20, so that the first center of mass is disposed close to the second center of mass of the aircraft 10, an operation end of the aerial operation device 30 extends beyond a rotor coverage range of the aircraft 10, and a non-operation end opposite to the operation end of the aerial operation device 30 achieves gravitational balance with the operation end through the lever principle, to prevent the first center of mass from moving away from the second center of mass and affecting the flight control of the aircraft 10;

in the adjustment state, when the aircraft 10 flies in linkage with the aerial operation device 30, a relative position change between the first center of mass and the second center of mass is caused, thus generating the dynamic disturbance, and the dynamic disturbance adjustment mechanism 20 can adjust a linkage state of the aerial operation device 30 to reduce the impact of the dynamic disturbance on the flight control of the aircraft 10; and/or, when the aircraft 10 hovers and the aerial operation device 30 performs an operation, a reverse force in the operation direction can be generated, affecting the flight control of the aircraft 10, and the dynamic disturbance adjustment mechanism 20 can adjust the transmission degree of the reverse force, thereby achieving stable aerial operation of the aerial operation system.

Wherein, when the aircraft 10 takes off and carries the dynamic disturbance adjustment mechanism 20 and the aerial operation device 30 to fly together, when the overall system state of the aerial operation system 1 is in force balance and hovering statically in the air, as long as the non-operation end opposite to the operation end of the aerial operation device 30 achieves gravitational balance with the operation end through the lever principle, and the first center of mass position of the aerial operation device 30 and the second center of mass position of the aircraft 10 are on the same longitudinal axis, it can prevent the first center of mass from moving away from the second center of mass and affecting the flight control of the aircraft 10.

Of course, during operation of the aerial operation device 30, it is inevitably affected by the external environment, such as when the aerial operation device 30 contacts a high-elevation facade or is affected by high-elevation airflow, a relative position change between the first center of mass of the aerial operation device 30 and the second center of mass of the aircraft 10 is caused, thus generating the dynamic disturbance. In order to achieve adjustment of the dynamic disturbance, on one hand, the dynamic disturbance adjustment mechanism 20 can adjust the linkage state of the aerial operation device 30 to reduce the impact of the dynamic disturbance on the flight control of the aircraft 10; on the other hand, when the aircraft 10 hovers and the aerial operation device 30 performs an operation, a reverse force in the operation direction can be generated to affect the flight control of the aircraft 10, and the dynamic disturbance adjustment mechanism 20 can adjust the transmission degree of the reverse force, thereby achieving stable aerial operation of the aerial operation system.

In one embodiment, referring to FIG. 1 to FIG. 3, the aerial operation system is configured such that, in the stationary state, the first center of mass and the second center of mass are located on the same longitudinal axis.

In this embodiment, the first center of mass and the second center of mass are located on the same longitudinal axis, so that the center of mass of the entire aerial operation system is also on the same straight line, which can prevent the first center of mass from moving away from the second center of mass and affecting the flight control of the aircraft 10.

In one embodiment, referring to FIG. 1 to FIG. 3, the dynamic disturbance adjustment mechanism 20 includes: a first end plate 21, a second end plate 22, a fluid actuator 23, and a rotational support structure 24; the first end plate 21 is connected to the aircraft 10, the second end plate 22 is connected to the middle portion of the aerial operation device 30, two ends of the fluid actuator 23 are respectively connected to the first end plate 21 and the second end plate 22, and the rotational support structure 24 is connected between the first end plate 21 and the second end plate 22;

when the aircraft 10 flies in linkage with the aerial operation device 30, based on an external pressure borne by the fluid actuator 23, an internal air pressure of the fluid actuator 23 can be accordingly adjusted to maintain a balanced state between the aerial operation device 30 and the aircraft 10, thereby reducing the dynamic disturbance; wherein the external pressure is an inertial pressure generated by the aerial operation device 30 on the second end plate 22 due to the dynamic disturbance; and/or,

when the aircraft 10 hovers and the aerial operation device 30 performs an operation, based on a passive compliance of the fluid actuator 23 itself, the reverse force in the operation direction is passively absorbed.

Wherein, the rotational support structure 24 is used to support the fluid actuator 23, preventing the fluid actuator 23 from collapsing and failing. The dynamic disturbance adjustment mechanism 20 can bend and deform, i.e., the first end plate 21 and the second end plate 22 can rotate relative to each other. The rotational support structure 24 can maintain the relative rotation of the first end plate 21 and the second end plate 22, and also ensure that the fluid actuator 23 will not collapse.

Furthermore, when using the dynamic disturbance adjustment mechanism 20 for actual adjustment, it can be divided into at least two scenarios: the first scenario is when the aircraft 10 flies in linkage with the aerial operation device 30; the second scenario is when the aircraft 10 hovers and the aerial operation device 30 performs an operation.

In the first scenario above, it can be considered as a stage from the start of takeoff of the aerial operation system 1 to the arrival of an area to be operated. The fluid actuator 23 specifically includes two soft muscles symmetrically arranged on the left and right, respectively referred to as a first soft muscle and a second soft muscle. During the takeoff of the aerial operation system 1 to the arrival of the area to be operated, a first real-time external pressure borne by the first soft muscle and a second real-time external pressure borne by the second soft muscle are detected in real time. If the first real-time external pressure is less than the second real-time external pressure, it indicates that the first center of gravity of the aerial operation device 30 tilts toward the side of the first soft muscle. Then, the air pressure inside the second soft muscle can be increased to balance the second real-time external pressure. Alternatively, the air pressure inside the first soft muscle can be simultaneously decreased, using negative pressure to compress the first soft muscle to assist the second soft muscle in balancing the second real-time external pressure, causing the first center of gravity of the aerial operation device 30 to return to a position between the first soft muscle and the second soft muscle, ultimately maintaining the balanced state between the aerial operation device 30 and the aircraft 10, thereby reducing the dynamic disturbance. Conversely, if the first real-time external pressure is greater than the second real-time external pressure, it indicates that the first center of gravity of the aerial operation device 30 tilts toward the side of the second soft muscle. Then, the air pressure inside the first soft muscle can be increased to balance the first real-time external pressure. Alternatively, the air pressure inside the second soft muscle can be simultaneously decreased, using negative pressure to compress the second soft muscle to assist the first soft muscle in balancing the first real-time external pressure, causing the first center of gravity of the aerial operation device 30 to return to a position between the first soft muscle and the second soft muscle, ultimately maintaining the balanced state between the aerial operation device 30 and the aircraft 10, thereby reducing the dynamic disturbance. After completing the above dynamic adjustment, the aircraft 10 hovers over the area to be operated and the aerial operation device 30 is ready to start operations.

Afterwards, when the aircraft 10 hovers over the area to be operated and the aerial operation device 30 performs an operation, the fluid actuator 23 can dynamically adjust the air pressure of the two soft muscles based on the reverse force from the contact operation. The specific adjustment is as described above and will not be repeated here. It is also possible to passively absorb the reverse force based on the passive compliance of the two soft muscles without adjusting the internal air pressure of the soft muscles.

In one embodiment, referring to FIG. 1 to FIG. 3, as a first embodiment of the aerial operation device 30, the aerial operation device 30 includes:

a first long rod 31;

a spraying execution assembly 32 provided at one end of the first long rod 31, the spraying execution assembly 32 being used for performing a spraying operation on a high-elevation facade;

an electric control box 33 provided at the other end of the first long rod, the electric control box 33 being used for installing an electrical control component for controlling operation of the spraying execution assembly 32 and/or the dynamic disturbance adjustment mechanism 20, and the electric control box 33 being provided with an accommodating cavity 331 for accommodating a liquid storage pot; a top end of the electric control box 33 being connected to the second end plate 22; and

the liquid storage pot 332 provided within the accommodating cavity 331, the liquid storage pot 332 being connected to the spraying execution assembly 32 via a connection tube 34.

Wherein, as the first embodiment of the aerial operation device 30, its weight is concentrated at the electric control box 33. In order to achieve that the first center of gravity position of the aerial operation device 30 and the second center of gravity position of the aircraft 10 are on the same longitudinal axis, the electric control box 33 is provided below the aircraft 10. The electric control box 33 is provided with an electrical control component serving as the core controller of the aerial operation device 30, and the liquid storage pot 332 having a certain weight is provided within the accommodating cavity 331 of the electric control box 33.

When initially filling the liquid storage pot 332 with spray liquid (such as pesticide, paint, disinfectant, etc.) and fixing it at the accommodating cavity 331, afterwards the aircraft 10 starts and flies to a high-elevation location to be operated, and the aerial operation device 30 moves together to the location to be operated. After the aerial operation system 1 moves to the location to be operated, it first maintains force balance and is in a stationary state, then the electrical control component controls the spraying execution assembly 32 to aim at the object to be operated at the location to be operated for spraying operation.

If during the spraying operation, the aerial operation system 1 cannot maintain a stationary state due to external environmental influences, it switches to the adjustment state. The dynamic disturbance adjustment mechanism 20 can generate a reverse force in the operation direction, which affects the flight control of the aircraft 10, and the dynamic disturbance adjustment mechanism 20 can adjust the transmission degree of the reverse force, thereby achieving stable aerial operation of the aerial operation system.

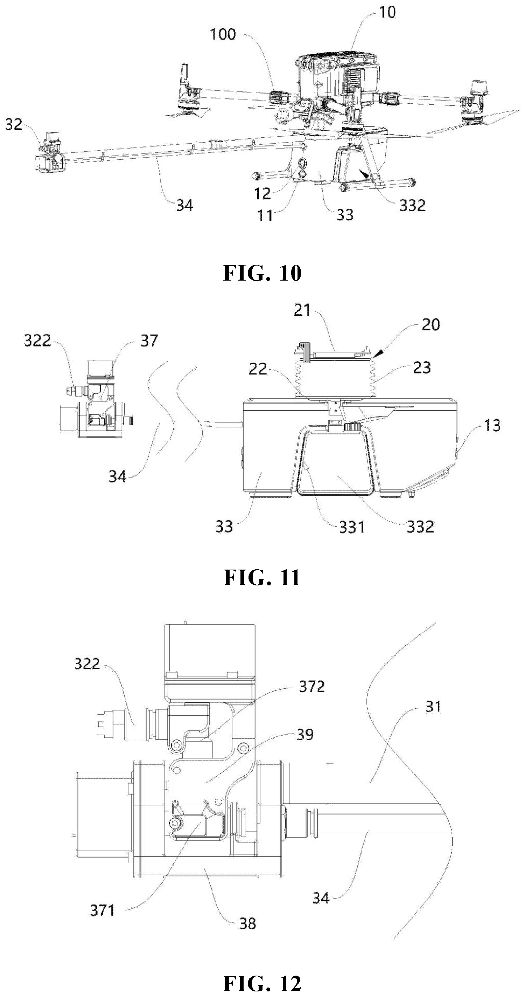

In one embodiment, as shown in FIG. 10 to FIG. 16, the spraying execution assembly 32 includes a spraying head 322, a rigid variable bending flow channel 37, and a first rotation assembly 40. The rigid variable bending flow channel 37 is connected between the spraying head 322 and the connection tube 34. The rigid variable bending flow channel 37 includes a first variable segment 371 having a first inlet end 3711 and a first outlet end 3712. The first inlet end 3711 and the first outlet end 3712 are arranged at an angle. The first rotation assembly 40 is configured to drive the first variable segment 371 to rotate, with a rotation axis parallel to an axis of the first inlet end 3711.

In application, the material of the rigid variable bending flow channel 37 is rigid, facilitating improved rigidity of the liquid path; moreover, the variable bending flow channel can achieve adjustable liquid path, i.e., it can be adjusted according to the specific position of the target spraying surface of the object to be sprayed 90, so that the orientation of the spraying head 322 changes with the orientation of the outlet end, thereby achieving precise spraying on the object to be sprayed 90.

Specifically, the first rotation assembly 40 is used to rotate the rigid variable bending flow channel 37, thereby making the liquid path adjustable; additionally, having the rotation axis parallel to the axis of the first inlet end 3711 can effectively improve the stability of the entire spraying execution assembly 32 when adjusting the orientation of the spraying head 322, to ensure stable and precise spraying on the object to be sprayed 90.

In some embodiments, as shown in FIG. 10 to FIG. 16, the first rotation assembly 40 is provided on the electric control box 33 or the first long rod 31. The first rotation assembly 40 connects the first inlet end 3711 and a terminal end of the connection tube 34 via a first transmission member, thereby driving the first variable segment 371 to rotate about the axis of the first inlet end 3711.

This can further reduce the weight of the terminal end of the spraying execution assembly 32, thereby improving the sensitivity and operability of rotational adjustment for the spraying execution assembly 32. In application, the first transmission member includes one of a pull cable, a belt, and a timing belt.

In some embodiments, as shown in FIG. 10 to FIG. 16, the spraying execution assembly 32 includes both the first rotation assembly 40 and a second rotation assembly 80. The rigid variable bending flow channel 37 further includes a second variable segment 372 having a second inlet end 3721 and a second outlet end 3722. The second inlet end 3721 and the second outlet end 3722 are arranged at an angle. The second rotation assembly 80 is configured to drive the second variable segment 372 to rotate, with a rotation axis of the second rotation assembly 80 parallel to an axis of the second inlet end 3721. The first inlet end 3711 is rotatably connected to the terminal end of the connection tube 34, the first outlet end is coaxially and rotatably connected to the second inlet end 3721, and the second outlet end 3722 is connected to the spraying head 322.

By providing two sets of rotation assemblies to rotate the variable bending flow channel in different directions, a spraying range with a larger angle and a larger range can be achieved to meet the operational requirements for aerial spraying operations in complex scenarios.

In some embodiments, the rotation direction of the dynamic disturbance adjustment mechanism 20 is a vertical direction, thereby adjusting the relative position between the spraying execution assembly 32 and the aircraft 10 in the vertical direction to adjust the spraying range, to adapt the aircraft 10 for aerial spraying operations.

The rotation direction of the first rotation assembly 40 and the rotation direction of the second rotation assembly 80 are perpendicular to each other; i.e., there are two situations: first, the rotation direction of the first rotation assembly 40 is the vertical direction, and the rotation direction of the second rotation assembly 80 is the horizontal direction; second, the rotation direction of the first rotation assembly 40 is the horizontal direction, and the rotation direction of the second rotation assembly 80 is the vertical direction. Through the cooperation of the rotation directions of the first rotation assembly 40 and the second rotation assembly 80, the orientation of the entire liquid path and the spraying head 322 can be adjusted to the greatest extent, allowing spraying on any surface of the object to be sprayed 90. It should be noted that, generally speaking, the aircraft 10 usually flies in space parallel to or perpendicular to the horizontal plane. The vertical direction refers to the direction perpendicular to the horizontal plane, and the horizontal direction refers to the direction parallel to the horizontal plane.

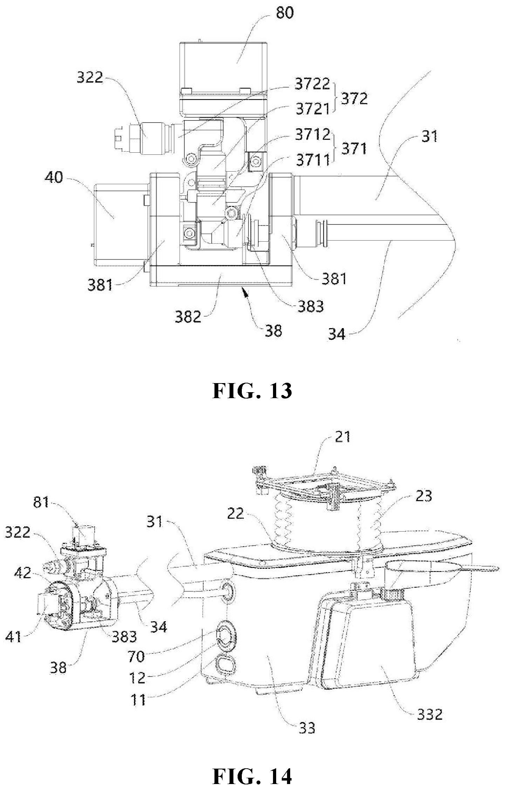

In some embodiments, as shown in FIG. 13 to FIG. 16, the spraying execution assembly 32 further includes a mounting base 38. The mounting base 38 is connected to the connection tube 34, and the terminal end of the connection tube 34 passes through one end of the mounting base 38. Two ends of the first long rod 31 are respectively connected to the electric control box 33 and the mounting base 38. The mounting base 38 has oppositely arranged fixed ends 381 and a connection end 382 connecting the two fixed ends 381. An installation space is formed between the two fixed ends 381. The connection end 382 is provided with a support portion 383 located within the installation space.

The first rotation assembly 40 includes a first servomotor 41. The first inlet end 3711 and the terminal end of the connection tube 34 are rotatably connected at the support portion 383. The first servomotor 41 is provided on the fixed end 381 away from the connection tube 34, and a rotation shaft of the first servomotor 41 is coaxially arranged with the first inlet end 3711. The first servomotor 41 is connected to the electric control box 33 via a first wire. The first wire is laid along the first long rod 31 and the mounting base 38. The first servomotor 41 is used to control the first variable segment 371 to rotate in a vertical direction.

In some embodiments, as shown in FIG. 13 to FIG. 16, the fixed end 381 provided with the first servomotor 41 is also rotatably provided with a mounting frame 39. The mounting frame 39 rotates following rotation of the first variable segment 371. The first variable segment 371 is fixedly connected to the mounting frame 39. The second variable segment 372 is rotatably connected or in clearance fit with the mounting frame 39. The mounting frame 39 has two angled internal cavities, each internal cavity respectively envelops different angled portions of the first variable segment 371. This allows the mounting frame 39 and the first variable segment 371 to be connected as one unit, thereby enhancing the control and adjustment of the rotation of the first variable segment 371.

The second rotation assembly 80 includes a second servomotor 800. The second servomotor 800 is connected to the mounting frame 39. The second servomotor 800 is connected to the electric control box 33 via a second wire. The second wire is provided inside the first long rod 31, the mounting base 38, and the mounting frame 39. The second servomotor 800 is used to control rotation of the second variable segment 372. The rotation direction of the second variable segment 372 is perpendicular to the rotation direction of the first variable segment 371. By connecting the power supply inside the electric control box 33 via the first wire and the second wire, there is no need to add a power supply at the mounting base 38, thereby reducing the load at the terminal end of the spraying execution assembly 32.

In some embodiments, as shown in FIG. 13 to FIG. 16, the first rotation assembly 40 includes a wire winding guard plate 42. The wire winding guard plate 42 is provided at a position corresponding to the first servomotor 41. The wire winding guard plate 42 provides a winding space for the first wire to prevent the first wire from interference and resulting in squeezing damage during rotation.

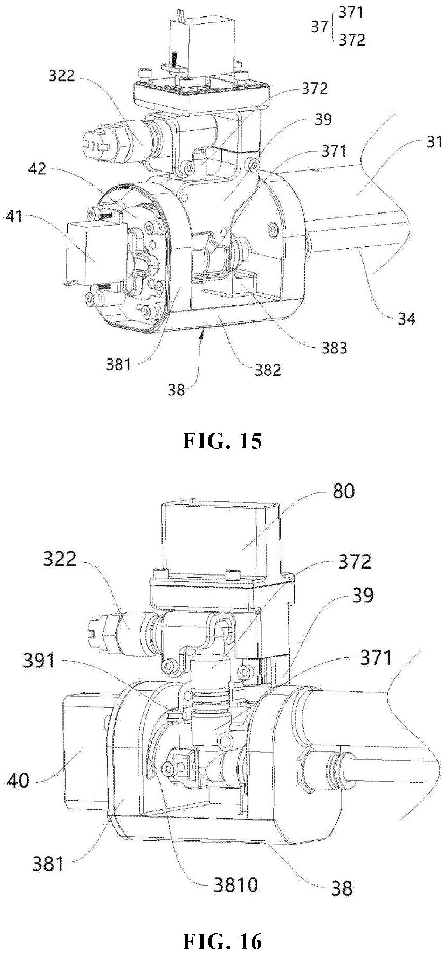

In some embodiments, as shown in FIG. 16, the fixed end 381 is provided with an arcuate positioning groove 3810 located on one side of the fixed end 381 close to the installation space. The mounting frame 39 is provided with a positioning protrusion 391 extending toward the arcuate positioning groove 3810. The positioning protrusion 391 rotates within the arcuate positioning groove 3810, and its rotation angle is ±90°. The relative position between the positioning protrusion 391 and the arcuate positioning groove 3810 can be used to roughly determine the rotation angle of the first variable segment 371. In some embodiments, angle scales can also be provided on the periphery of the arcuate positioning groove 3810, so that the rotation angle of the first variable segment 371 can be read in real time, facilitating precise adjustment of the rotation amplitude of the first variable segment 371.

In some embodiments, the wire winding guard plate 42 is provided between the first servomotor 41 inside the fixed end 381 of the mounting base and the positioning protrusion 391, close to the rotation shaft of the first servomotor 41. The first wire passes into the positioning protrusion 391 and enters the interior of the mounting frame 39. When the positioning protrusion 391 drives one end of the first wire to rotate along the arcuate positioning groove 3810, the portion of the first wire outside the positioning protrusion 391 rotates between the interior of the side of the fixed end 381 where the arcuate positioning groove 3810 is opened and the wire winding guard plate 42 without being interfered with, compressed, or entangled.

In some embodiments, the electric control box 33 further includes a first control module for controlling the first rotation assembly 40 and/or the second rotation assembly 80 to control an angle and a relative position between the aircraft 10 and the spraying head 322, and a second control module for controlling activation and deactivation of the spraying execution assembly 32. The first control module is electrically connected to the first rotation assembly 40 and/or the second rotation assembly 80, and the second control module is electrically connected to the spraying execution assembly 32. In application, the first control module and the second control module are both integrated on an operation handle of the aircraft 10, allowing real-time control of the aircraft 10 while facilitating adjustment of the orientation of the spraying head 322, positioning it in the best pose facing the target surface of the object to be sprayed 90, achieving precise and full-coverage spraying operations.

In some embodiments, as shown in FIG. 10, an interface 100 for connecting to a power supply and communication of the aircraft 10 is further provided above the electric control box 33, and is connected to the electric control box 33 via a wire, to enable convenient adaptation to the aircraft 10 through mechanical, power supply, communication, and software control interfaces.

In some embodiments, as shown in FIG. 10 and FIG. 11, the electric control box 33 is provided with an indicator light 13 to display a connection status between the spraying execution assembly 32 and a control system of the unmanned aircraft. The status indicator light 13 displays different connection statuses of the control system of the unmanned aircraft through various combinations of different colors, different durations and frequencies of on/off. The indicator light 13 is provided on a rear side of the control box: 1. red light flashing indicates the Linux development board is in the booting process; 2. yellow light flashing indicates the control system of the unmanned aircraft is in the process of connecting; 3. green light steady on indicates the control system of the unmanned aircraft is connected; 4. red light steady on indicates the control system of the unmanned aircraft fails to connect, exits abnormally, etc.

In some embodiments, as shown in FIG. 14, the aerial operation system further includes a vision module 70 provided on the electric control box 33. The vision module 70 is used for acquiring in real-time relative position information between a target spraying surface of an object to be sprayed 90 and the aircraft 10, and transmitting the relative position information to the first control module and the second control module. The first control module controls the first rotation assembly 40 and the second rotation assembly 80 to rotate corresponding angles based on the relative position information, to move the spraying head 322 to a preset position, and then the second control module activates the spraying execution assembly 32 to spray the target spraying surface of the object to be sprayed 90. In application, the vision module 70 includes a camera. The camera is provided inside the electric control box 33 and passes through one side of the electric control box 33 where the spraying head 322 is provided, to acquire the real-time position of the spraying head 322 and the relative position of the target spraying surface of the object to be sprayed 90.

In some embodiments, as shown in FIG. 10 and FIG. 14, a mounting part 11 is provided at a lens of the vision module 70, and a detachable lens protective sheet 12 is arranged on the mounting part 11 to prevent spray liquid droplets from contaminating the lens of the vision module 70 during a spraying operation.

In one embodiment, referring to FIG. 1 to FIG. 3, the spraying execution assembly 32 includes a servomotor 321 and a spraying head 322. The spraying head 322 is provided at a bottom end of the servomotor 321. The servomotor 321 is used to control a spraying operation alignment angle of the spraying head 322.

Wherein, the servomotor 321 is connected to the electrical control component in the electric control box 33 and can receive a control signal from the electrical control component to adjust the spraying operation alignment angle of the spraying head 322. The spraying head 322 is connected to the liquid storage pot 332 via the connection tube 34. After the electrical control component sends an activation control signal to a spray pump of the liquid storage pot 332, the spray liquid in the liquid storage pot 332 flows through the connection tube 34 and is sprayed out from the spraying head 322. It can be seen that the spraying head can adjust the alignment angle under the drive of the servomotor to achieve a larger spraying coverage area.

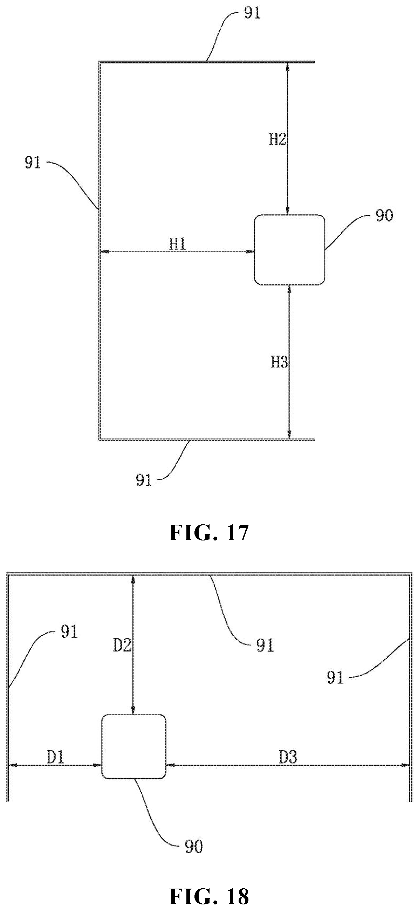

In application, as shown in FIG. 17 and FIG. 18, actual operation situations of the aerial operation system include: the spraying execution assembly 32 is used for automatically spraying an object to be sprayed 90 to cover all surfaces of the object to be sprayed 90, wherein at least one side surface of the object to be sprayed 90 has an obstacle 91 and at least one side surface of the object to be sprayed 90 has no obstacle 91, and a distance between an obstacle 91 located on any side surface of the object to be sprayed 90 and the object to be sprayed 90 is 0.5 m to 1 m. In application, the distance between an obstacle 91 located on any side surface of the object to be sprayed 90 and the object to be sprayed 90 is 0.5 m, 0.6 m, 0.7 m, 0.8 m, 0.9 m, 1 m, or any distance within the range of 0.5 m to 1 m.

In other embodiments, the spraying execution assembly 32 is used for automatically spraying an object to be sprayed 90 to cover all surfaces of the object to be sprayed 90, wherein only one side surface of the object to be sprayed 90 has no obstacle 91;
a spraying distance of the spraying head 322 is 0.5 m to 1 m, and a spray fan angle of the spraying head 322 is 20° to 90°; a straight-line distance between the spraying head 322 and a blade of the aircraft 10 is 0.5 m to 0.8 m.

In application, an effective spraying distance of the spraying head 322 is 0.5 m, 0.6 m, 0.7 m, 0.8 m, 0.9 m, 1 m, or any distance within the range of 0.5 m to 1 m; a spray fan angle of the spraying head 322 is 20°, 30°, 40°, 50°, 60°, 70°, 80°, 90°, or any angle within the range of 20° to 90°; a straight-line distance between the spraying head 322 and a blade of the aircraft 10 is 0.5 m, 0.6 m, 0.7 m, 0.8 m, or any distance within the range of 0.5 m to 0.8 m.

In the prior art, a peristaltic pump is used for spraying: traditional spraying solutions use a high-pressure air compressor (power above 200W, generating pressure above about 500 kPa and airflow above 200 L/min) to provide airflow, generating negative pressure at the terminal end to suck up paint for gas-liquid mixing, and then spraying. However, the effective spraying distance is usually only 0.2 m.

If the device is installed on an aircraft 10 with a load below 3 kg, it cannot be used due to excessive power and weight. At the same time, because the effective spraying distance is too short, the aircraft 10 needs to be very close to the object being sprayed, which is very unsafe. Alternatively, the connection tube 34 needs to be made very long, but this also increases the risk of collision. By employing a peristaltic pump, combined with a spraying head 322 with an aperture of 1 mm and an opening angle within 30°, it can ensure an effective spraying distance of 0.8 m, which can meet many high-elevation component maintenance scenarios, such as applications requiring only paint coverage but not uniformity. In the peristaltic pump, a BPT material tube is used; even if the liquid is paint, it is difficult to corrode the tube. When assembling the peristaltic pump, a liquid outlet of the peristaltic pump and the spraying head 322 are positioned at almost the same height and connected with one straight soft tube, ensuring that the liquid is not affected by its own gravity during transfer, thereby avoiding an increase in flow resistance.

In application, when using the spraying execution assembly 32 provided in this application to spray viscous liquid, the spraying head 322 has an atomization function, and an aperture of the spraying head 322 is less than or equal to 1.5 mm, and a spray fan angle of the spraying head 322 is 0° to 30°. In practical application, let the effective spraying distance be S, the particle diameter when the liquid is ejected from the spraying head 322 be D, the flow velocity when the liquid is ejected from the spraying head 322 be W, the pressure generated by the spraying device be P, the volume of flow inside the connection tube 34 be F, and the flow velocity be V;

According to the Navier-Stokes equation:

$$\rho \, \frac{D\mu}{Dt} = -\nabla p + \nabla * \tau + \rho \, g;$$

where $\mu$ is the liquid viscosity, $\rho$ is the liquid density, p is the pressure, $\tau$ is the deviatoric stress tensor of the liquid itself, and g represents the acceleration it experiences during flow.

For the liquid to effectively hit a distant target object, after being sprayed horizontally, its vertical deviation before reaching the target object cannot exceed 2 cm; according to the free-fall calculation formula L=g*t*t/2, it can be calculated that its average velocity needs to reach 15 m/s, the density is usually less than 2 kg/L, the pressure generated by the peristaltic pump is usually between 0.2 MPa and 0.5 MPa, the aperture of the front atomizing spraying head 322 is 1.5 mm or less, and the spray fan angle is 30° or less. Then stable spraying can be achieved.

In one embodiment, referring to FIG. 1 to FIG. 3, the first long rod 31 is further provided with a plurality of suspension fixing members 311. One end of the connection tube 34 is connected to the liquid storage pot 332, and the other end of the connection tube 34 sequentially passes through the plurality of suspension fixing members 311 and is connected to the spraying execution assembly 32.

Wherein, a plurality of suspension fixing members 311 can be sequentially provided from left to right on a section of the first long rod 31 between the spraying execution assembly 32 and the electric control box 33. Specifically, each suspension fixing member 311 includes a first fixing ring and a second fixing ring. The first fixing ring is sleeved on the first long rod 31, and the second fixing ring is provided at a bottom end of the first fixing ring, and is used for restraining and securing the connection tube 34. After one end of the connection tube 34 is connected to a liquid outlet of the liquid storage pot 332, the other end sequentially passes through the second fixing rings of the plurality of suspension fixing members 311 and is finally connected to the spraying execution assembly 32. It can be seen that this method allows for the bundling and securing of the connection tube 34.

In one embodiment, referring to FIG. 1 to FIG. 3, a longitudinal axis of the accommodating cavity 331 and a longitudinal axis of the dynamic disturbance adjustment mechanism 20 are located on the same straight line.

Wherein, the weight of the electric control box 33 is concentrated at the electric control box body and the liquid storage pot 332 connected at the accommodating cavity 331. To achieve that the first center of gravity position of the aerial operation device 30 and the second center of gravity position of the aircraft 10 are on the same longitudinal axis, it can be specifically configured such that the longitudinal axis of the accommodating cavity 331 and the longitudinal axis of the dynamic disturbance adjustment mechanism 20 are located on the same straight line. In this way, when the liquid storage pot 332 filled with spray liquid is connected to the accommodating cavity 331, the longitudinal axis containing the center of gravity of the liquid storage pot 332, the longitudinal axis containing the center of gravity of the aircraft, and the longitudinal axis containing the center of gravity of the dynamic disturbance adjustment mechanism 20 all lie on the same straight line, and the center of gravity of the entire aerial operation system is also on the same straight line. When the volume of spray liquid in the liquid storage pot 332 decreases due to spraying operations, it can still maintain that the first center of gravity position of the aerial operation device 30 and the second center of gravity position of the aircraft 10 are on the same longitudinal axis, thereby preventing the first center of mass from moving away from the second center of mass and affecting the flight control of the aircraft 10.

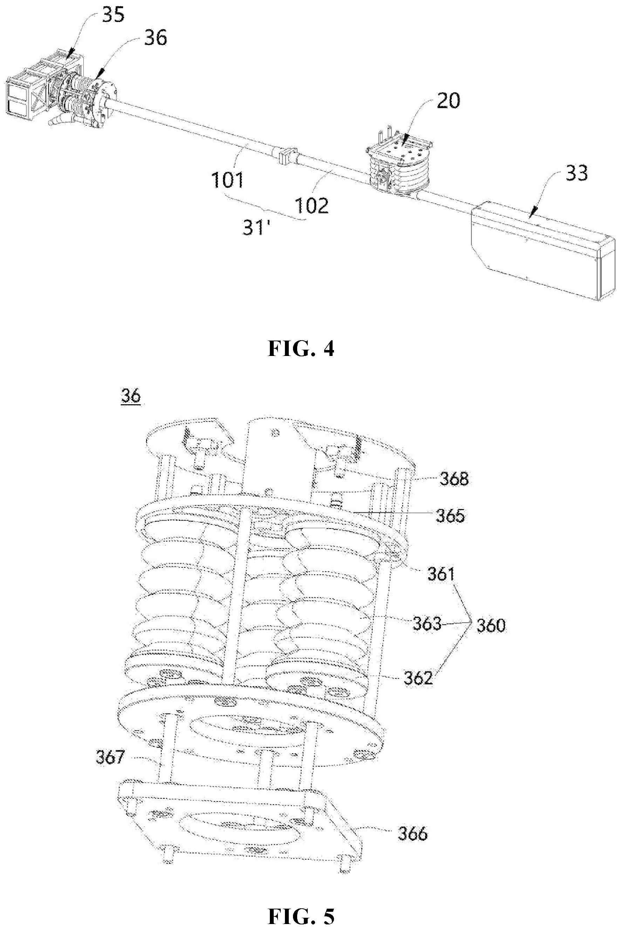

In one embodiment, referring to FIG. 4 to FIG. 5, as a second embodiment of the aerial operation device 30, the aerial operation device 30 includes:

a second long rod 31', a middle portion of the second long rod 31' being connected to the second end plate 22 of the dynamic disturbance adjustment mechanism 20;

an execution component 35, provided at one end of the second long rod 31', the execution component 35 being used for performing a contact-type operation on a high-elevation facade;

an electric control box 33, provided at the other end of the second long rod 31', the electric control box 33 being used for installing an electrical control component for controlling operation of the execution component and/or the dynamic disturbance adjustment mechanism;

an adaptive segment 36 connected between the second long rod 31' and the execution component 35, the adaptive segment 36 being capable of passively deforming to buffer a force exerted on the execution component 35 at a moment of contact with the high-elevation facade, and being capable of changing a pose of the execution component 35 relative to the second long rod 31' to place the execution component 35 at an angle adapted to the high-elevation facade; the adaptive segment 36 includes an adaptive driving member 360, the adaptive driving member 360 includes a first end wall 361, a second end wall 362, and a deformable flexible side wall 363 connected between the first end wall 361 and the second end wall 362, wherein the first end wall 361, the second end wall 362, and the flexible side wall 363 enclose to form an enclosed cavity 364 for containing a fluid.

Wherein, the second long rod 31' refers to a long strip structure with high rigidity and strength. The second long rod 31' is used to connect the execution component 35 to the aerial operation device and maintain a preset first distance between the execution component 35 and the aerial operation device, so that when the execution component 35 moves together with the aerial operation device to a high-elevation facade to be operated for performing the contact-type operation, it effectively prevents the aerial operation device from touching the high-elevation facade.

The dynamic disturbance adjustment mechanism 20 is provided at a middle position of the second long rod 31', specifically, the middle portion of the second long rod 31' is connected to the second end plate 22 of the dynamic disturbance adjustment mechanism 20. The dynamic disturbance adjustment mechanism 20 adjusts the position of the second long rod 31' relative to the aerial operation device, so that the execution component 35 can approach the high-elevation facade with a better pose. For example, extension/contraction motion of the dynamic disturbance adjustment mechanism 20 adjusts the distance between the second long rod 31' and the aerial operation device, and rotation of the dynamic disturbance adjustment mechanism 20 adjusts the angle between the second long rod 31' and the aerial operation device, etc.

The electric control box 33 is installed with an electrical control component for controlling operation of the execution component 35 and/or the dynamic disturbance adjustment mechanism 20. By providing the electric control box 33 at one end of the second long rod 31' away from the execution component 35, it also serves as a counterweight, achieving a relative balance between the electric control box 33 and the execution component 35 relative to the aerial operation device.

By providing the adaptive segment 36 between the second long rod 31' and the execution component 35, the adaptive segment 36 can passively deform, so that at the moment the execution component 35 contacts the high-elevation facade, the adaptive segment 36 passively deforms to buffer the instantaneous force on the execution component 35, achieving a soft contact with the high-elevation facade. Additionally, the adaptive segment 36 can also finely adjust the pose of the execution component 35 relative to the second long rod 31', so that when the execution component 35 initially contacts the high-elevation facade and the angle at which the execution component 35 is positioned does not allow all action points of the execution component 35 to contact the high-elevation facade, the adaptive segment 36 can adaptively adjust its own pose relative to the second long rod 31' to place the execution component 35 at an angle adapted to the high-elevation facade, i.e., to make the execution component 35 effectively contact the high-elevation facade.

During operation, when the execution component 35 transmits a force from the high-elevation facade to the adaptive driving member, causing the flexible side wall 363 to deform flexibly, the fluid flows within the enclosed cavity 364 to absorb part of the external force on the adaptive driving member 360, achieving a buffering function. That is, the reaction force from the high-elevation facade on the execution component 35 will not completely transmitted to the high-elevation operation device. By causing the flexible side wall 363 to deform flexibly, the pose of the execution component 35 relative to the second long rod 31' can be adaptively adjusted, i.e., the pose of the execution component 35 relative to the high-elevation facade can be adaptively adjusted, so that the execution component 35 maintains effective contact with the high-elevation facade. The fluid within the enclosed cavity 364 can be, but is not limited to, gas, liquid, etc.

In one embodiment, referring to FIG. 4, the second long rod 31' includes a first rod body 101 and a second rod body 102. One end of the first rod body 101 is rotatably connected to one end of the second rod body 102, so that the second long rod 31' has a folded state and an unfolded state. One end of the first rod body 101 away from the second rod body 102 is connected to the adaptive segment 36, and the second rod body 102 is connected to the dynamic disturbance adjustment mechanism 20 and the electric control box 33.

Specifically, one end of the first rod body 101 of the second long rod 31' is rotatably connected to one end of the second rod body 102, and the first rod body 101 and the second rod body 102 can rotate relative to each other by 180°, thereby achieving both unfolded and folded states. When the second long rod 31' is in the unfolded state, an angle between the first rod body 101 and the second rod body 102 is approximately 180°. When the second long rod 31' is in the folded state, the angle between the first rod body 101 and the second rod body 102 is approximately 0°. This allows the second long rod 31' to be folded and stored when the high-elevation facade operation mechanism is not in use, thereby effectively reducing the space occupied by the high-elevation facade operation mechanism when not in use.

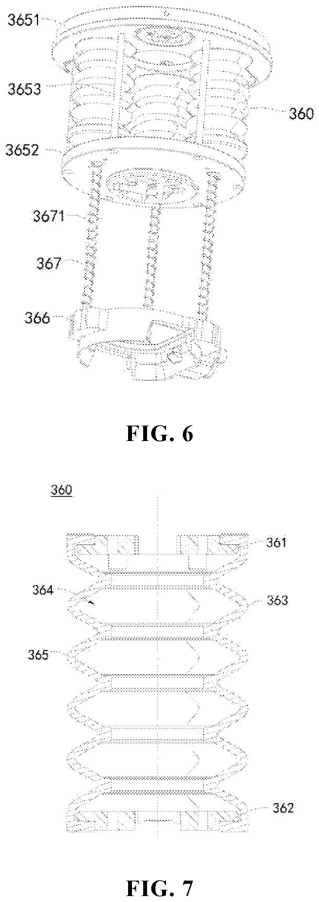

In one embodiment, referring to FIG. 4 to FIG. 7, the adaptive segment 36 includes a fixed base 365 fixedly connected to the second long rod 31', a movable base 366 for mounting the execution component 35, and at least three adaptive driving members 360. A first end wall 361 of each adaptive driving member 360 is fixed to the fixed base 365, and a second end wall 362 of each adaptive driving member 360 is movably connected to the movable base 366.

Wherein, by providing at least three adaptive driving members 360, with the first end walls 361 of the respective adaptive driving members 360 connected to different positions of the movable base 366, in a natural state, i.e., when the high-elevation facade operation mechanism is not subjected to external force, each adaptive driving member 360 is arranged parallel and spaced apart. When displacements of the second end walls 362 of the respective adaptive driving members 360 are different, the pose of the movable base 366 can be adjusted. It can be understood that during the contact process of the execution component 35 with the high-elevation facade, the buffering function is achieved through extension/contraction deformation of each adaptive driving member 360. By controlling the extension/contraction amount of each adaptive driving member 360, the execution component 35 can be adjusted to a position and pose that can contact the high-elevation facade, so that the execution component 35 can effectively contact the high-elevation facade.

In one embodiment, referring to FIG. 4 to FIG. 7, the fixed base 365 includes a first fixed plate 3651 and a second fixed plate 3652 spaced apart, and a fixed column 3653 fixedly connecting the first fixed plate 3651 and the second fixed plate 3652. The adaptive driving members 360 are provided between the first fixed plate 3651 and the second fixed plate 3652, and the first end walls 361 of the adaptive driving members 360 are fixed on and/or integrally formed with the first fixed plate 3651. The adaptive segment 36 further includes a plurality of connecting rods 367. One end of each connecting rod 367 is fixedly connected to the second end wall 362 of an adaptive driving member 360, and the other end of each connecting rod 367 is universally connected to the movable base 366. The connecting rods 367 pass through the second fixed plate 3652 and are universally connected to the second fixed plate 3652.

First elastic members 3671 are sleeved on the connecting rods 367. One end of each first elastic member 3671 abuts against a connection between a connecting rod 367 and the fixed base 365, and the other end of each first elastic member 3671 abuts against a connection between the connecting rod 367 and the movable base 366.

Wherein, the second end walls 362 of the adaptive driving members 360 are fixed on and/or integrally formed with the second fixed plate 3652, which means that: the second end walls 362 of the adaptive driving members 360 are fixedly connected to the second fixed plate 3652, such as by screw connection; it can also be that the second end walls 362 of the adaptive driving members 360 are integrally formed with the second fixed plate 3652; it can also be understood that fixed connection between the second end walls 362 of the adaptive driving members 360 and the second fixed plate 3652 is achieved by integrally forming the second end walls 362 of the adaptive driving members 360 with the second fixed plate 3652.

The first fixed plate 3651 and the second fixed plate 3652 are spaced apart. Two ends of the fixed column 3653 are respectively connected to the first fixed plate 3651 and the second fixed plate 3652, i.e., the first fixed plate 3651 and the second fixed plate 3652 are connected via the fixed column 3653. The number of fixed columns 3653 can be multiple, making the connection between the first fixed plate 3651 and the second fixed plate 3652 more stable.

The second fixed plate 3652 is used to support the plurality of connecting rods 367. One end of each connecting rod 367 close to the adaptive driving member 360 passes through the second fixed plate 3652 and is universally connected to the second fixed plate 3652, so that the second fixed plate 3652 only has a supporting effect on the connecting rod 367 and does not restrict movement of the connecting rod 367. The plurality of connecting rods 367 are all universally connected to the second fixed plate 3652, thereby providing support for the plurality of connecting rods 367 and ensuring stable movement of the movable base 366 and the execution component 35. Specifically, at the moment when the execution component 35 contacts the high-elevation facade, the execution component 35 transmits a force exerted by the high-elevation facade to the connecting rod 367, which then transfer the force to the adaptive driving member 360. The connecting rod 367 can slide relative to the second fixed plate 3652, and the connecting rod 367 can universally rotate relative to the second fixed plate 3652, thereby driving the adaptive driving member 360 to undergo flexible deformation. The arrangement of the connecting rod 367 provides a certain distance between the adaptive driving member 360 and the movable base 366, facilitating the transmission for structures such as the execution component 35 and also providing a larger space for position adjustment of the movable base 366.

Optionally, the connecting rod 367 and the second fixed plate 3652 are universally connected via a first universal ball bearing. The first universal ball bearing can be fixed to the second fixed plate 3652, and the connecting rod 367 passes through a spherical structure of the first universal ball bearing. The connecting rod 367 and the movable base 366 are universally connected via a second universal ball bearing. The movable base 366 has an annular plate structure. The plurality of adaptive driving members 360 are arranged circumferentially around a centerline of the movable base 366. The plurality of connecting rods 367 are also arranged circumferentially around the centerline of the movable base 366, and connection positions of the respective connecting rods 367 and the movable base 366 are also arranged circumferentially around the centerline of the movable base 366. In this way, the position and pose of the execution component 35 can be adjusted more accurately, wherein the number of adaptive driving members 360 and movable bases 366 is not limited here and can be three, four, etc.

In this embodiment, the number of adaptive driving members 360 is three. The three adaptive driving members 360 are uniformly distributed circumferentially around the centerline of the movable base 366, equivalent to forming an equilateral triangle. By providing three adaptive driving members 360 arranged in an equilateral triangle, the pose feedback modeling process for the execution component 35 can be simplified, thereby reducing costs.

Wherein, the number of connecting rods 367 is equal to the number of adaptive driving members 360. One connecting rod 367 corresponds to and connects to one adaptive driving member 360. Each connecting rod 367 is connected to a movable base 366 at a different position.

The provision of the first elastic members 3671 makes the movement of the movable base 366 more stable, preventing shaking of the movable base 366 and the execution component 35 during adjustment. The first elastic member 3671 can be optionally a spring.

In one embodiment, referring to FIG. 4 to FIG. 7, the adaptive segment 36 further includes a plurality of sensors 368. The sensor 368 is one of an air pressure sensor, an angle sensor, and a displacement sensor. The plurality of sensors are used for respectively detecting parameter changes at different positions of the adaptive driving member 360 or parameter changes of multiple adaptive driving members 360.

Wherein, when the number of adaptive driving members 360 is one, during the contact process of the execution component 35 with the high-elevation facade, the plurality of sensors 368 are used for respectively detecting parameter changes at different positions of the adaptive driving member 360 in real time, to obtain force conditions at different positions of the execution component 35. When the number of adaptive driving members 360 is multiple, the number of sensors 368 is equal to the number of adaptive driving members 360.

During the contact process of the execution component 35 with the high-elevation facade, the plurality of sensors 368 are used for respectively detecting parameter changes of the multiple adaptive driving members 360 in real time, to obtain force conditions at different positions of the execution component 35.

Optionally, the pressure sensor can be an air pressure sensor or a hydraulic pressure sensor. For example, when the sensor 368 is an air pressure sensor and the fluid contained in the enclosed cavity 364 is gas, during the contact process of the execution component 35 with the high-elevation facade, the air pressure sensor detects air pressure data inside the enclosed cavity 364 at the corresponding position in real time and feeds the air pressure data back to a controller electrically connected to the high-elevation operation device. The controller can change the position and acceleration of the high-elevation operation device relative to the execution component 35 based on feedback from the air pressure sensor, thereby adjusting the angle of the second long rod 31' relative to the high-elevation facade and the pressure on the contact surface, i.e., adjusting the angle of the execution component 35 relative to the high-elevation facade and the pressure on the contact surface. It can be understood that, through the coordinated work of the air pressure sensor and the controller, active adjustment of the angle of the execution component 35 relative to the high-elevation facade and the pressure on the contact surface is achieved.

When the sensor 368 is a displacement sensor, during the contact process of the execution component 35 with the high-elevation facade, the displacement sensor detects the extension/contraction amount of the adaptive driving member 360 in real time and feeds the data back to the electrical control component electrically connected to the electric control box 33 of the high-elevation operation device.

In the prior art, there are cases where foldable soft muscles are used for robots, but there are many shortcomings. For example, currently widely used arms and robots most commonly combine rigid driving members (motors, hydraulic cylinders, pneumatic cylinders, etc.) with rigid structural parts and rigid transmission parts. Because the driving members and structural parts are all rigid structures, one or more of the following problems may exist: a). It may cause mechanical damage and harm to surrounding organisms or objects, with poor safety; b). Electrical damage and harm caused by electrical drive; c). Limited degrees of freedom for a single arm segment, leading to limited operational range, poor environmental adaptability. Increasing degrees of freedom requires increasing the number of arm segments and corresponding rotation mechanisms, reduction mechanisms, introducing new problems (currently robot joints generally use RV reduction mechanisms, harmonic reduction mechanisms, which are very expensive and occupy a large proportion in cost composition); d). Small load-to-self-weight ratio, small energy efficiency ratio. To overcome these problems, some prior art incorporates flexible components. For example, elastic members (springs, rubber, etc.) are used between rigid parts for connecting, or pull cable control schemes are used. However, these schemes all have some defects. For example, schemes using elastic members cannot simplify the structure or reduce weight, nor can they solve the shortcomings a) to d) above. In pull cable control schemes, each control unit requires an independent drive module. As the load and operating distance increase, the volume, self-weight, power consumption, and difficulty of precise control of the entire system will increase multiplicatively, leading to problems of high costs, difficulty in layout, and difficulty in achieving ideal operational effects.

Furthermore, the prior arts use fluid-driven artificial muscles as actuators to operate independently or combine with rigid structural parts and transmission parts to form fingers, claws, or robotic arms for operation. Specifically, such artificial muscles are partially or entirely formed by a flexible outer wall enclosing a cavity, using fluid in the cavity to drive shape and/or size changes of the side wall to perform operation in the direction of change. However, such artificial muscles cannot simultaneously overcome the above problems a) to d) and introduce new problems: e). One or both of the working stroke and working load are very small; f. The change in fluid volume cannot be linearly related to the displacement, thus stable output force (output force = fluid pressure $\times$ cross-sectional area) and displacement cannot be obtained; g. If constraints are applied to the fluid in directions other than the working direction to solve problem e, the proportion of rigid structural parts has to be increased, making it impossible to solve one or all of problems a) to d) again. To solve the above problems, some of these artificial muscles use a flexible outer wall with folding structure. However, there is no clear structural feature or design principle for artificial muscles with folding structure claiming to solve the aforementioned problems a) to g), and general folding structures without special design introduce new problems: h). Strain in the folding structure tends to concentrate at intersections of folding faces. Concentration of stress leads to local high values of strain, easily causing deformation of the material beyond its elastic range, leading to bulging, collapse, and other deformations of the fluid cavity, and even fatigue cracking that damages the sealing of the cavity, causing failure.

Therefore, existing soft muscles have a large deformation range, and there is a risk that the overall strain of the material is large (the material itself cannot be absolutely uniform due to manufacturing process limitations), causing local strain peaks to exceed the material's elastic deformation range, leading to local failure (reduced elasticity, micro-cracks, etc.), affecting service life. Additionally, existing soft muscles may deviate from their preset folded state during operation.

To solve at least part of the above technical problems, the present disclosure provides a soft muscle or stacked structure fluid actuator, characterized by high pressure-bearing capacity, small strain, and long service life, which can overcome at least part of the various technical shortcomings mentioned above, thereby achieving a high load-to-self-weight ratio, large output force, and linear output force. The present disclosure provides targeted designs for the shapes of soft muscles with a stacked structure adapted to various working conditions, striving to distribute the overall strain uniformly on the flexible side wall (or, uniformly distributed among the respective folding faces) rather than concentrating at creases. This has obvious positive significance for improving the energy conversion efficiency of soft muscles, enhancing environmental and operational tolerance (wider temperature range, larger pressure differences, etc.), and extending service life.

In one embodiment, referring to FIG. 3, FIG. 8A to FIG. 8D, and FIG. 9A to FIG. 9B, the fluid actuator 23 is a soft muscle or stacked structure fluid actuator 50 (soft muscle or stacked structure fluid actuator 50 can be considered as two different names for the same object). The stacked structure fluid actuator 50 includes two end faces 51, a flexible side wall 52, and a drive source interface 53. The flexible side wall 52 and the two end faces 51 enclose to form a tubular cavity having a central axis along a longitudinal direction.

The flexible side wall 52 is designed as or includes a strain-uniformly-distributed stacked structure capable of extending/contracting and/or bending along the direction of the central axis. The strain-uniformly-distributed stacked structure is formed by stacking two or more strain-uniformly-distributed stacked layers 60 along the central axis, so that strain of the entire flexible side wall 52 is uniformly distributed among the respective strain-uniformly-distributed stacked layers 60. It should be noted that "strain-uniformly-distributed" herein does not mean that the actual strain can achieve completely uniform distribution, but rather that it should be dispersed as evenly as possible without concentrating at certain positions (creases). Concentration at certain positions (creases) will cause strain/stress to be significantly higher in some small areas than in others, which may result in fatigue/failure beyond the elastic deformation range of the material in certain situations. The strain-uniformly-distributed stacked layer 60 is designed as or includes a strain unit having a folding face 61 and a crease 62. Based on a combination of shape, thickness, and stacking manner of the strain unit, during the process of the flexible side wall 52 extending/contracting and/or bending along the direction of the central axis, strain of the strain unit is uniformly distributed on the folding face 61 and not concentrated at the crease 62. The drive source interface 53 is provided on the flexible side wall 52 or on an end face 51. The drive source interface 53 is used to change a pressure difference $\Delta P$ between inside and outside of the cavity and cause the strain-uniformly-distributed stacked structure to compress or extend to drive the end face 51 of the stacked structure fluid actuator 50 to move. The strain-uniformly-distributed stacked layer 60 is formed by enclosing folding faces 61 of a single strain unit. A connection between folding faces 61 of two adjacent strain-uniformly-distributed stacked layers 60 forms a crease 62. The crease 62 is located in a crease plane 63 perpendicular to the central axis. In an initial state, the crease plane 63 is planar.

The strain unit has an intrusion angle $\theta$, an intrusion depth coefficient a, a folding face width 1, and a wall thickness t, wherein the intrusion angle $\theta$, the intrusion depth coefficient a, the folding face width 1, and the wall thickness t are all defined based on a cross-section of the strain unit cut by an S-plane. In the present disclosure, the "S-plane" is defined as follows: when any segment of an outer contour line or inner contour line of a protruding crease on a crease plane is a curve segment, a plane perpendicular to a tangent at any point on that curve segment and passing through that point is the S-plane for that point on the crease; when any segment of an outer contour line or inner contour line of a protruding crease on a crease plane is a straight line segment, a plane perpendicular to that straight line segment at any point and passing through that point is the S-plane for that point on the crease. The intrusion angle $\theta$ is an angle between the folding face 61 and an adjacent crease plane 63. The intrusion angle $\theta$ varies with compression or extension of the strain-uniformly-distributed stacked structure. The folding face width 1 is a width of the folding face 61 from a radial outer side of a protruding crease to a radial inner side of a recessed crease. A projection of the folding face width 1 in a direction perpendicular to the central axis is defined as an intrusion depth v. The intrusion depth coefficient a is a proportional relationship v/R between the intrusion depth v and an equivalent radius R of the protruding crease. The wall thickness t is a thickness of the flexible side wall 52. The intrusion angle $\theta$, the intrusion depth coefficient a, the folding face width 1, and the wall thickness t are numerically interrelated and have a defined combination of values, such that during the deformation process of the stacked structure fluid actuator 50, the flexible side wall 52 only undergoes folding and/or extending of the strain-uniformly-distributed stacked structure, and strain of the flexible side wall 52 is uniformly distributed among the respective folding faces 61 and not concentrated at the creases.

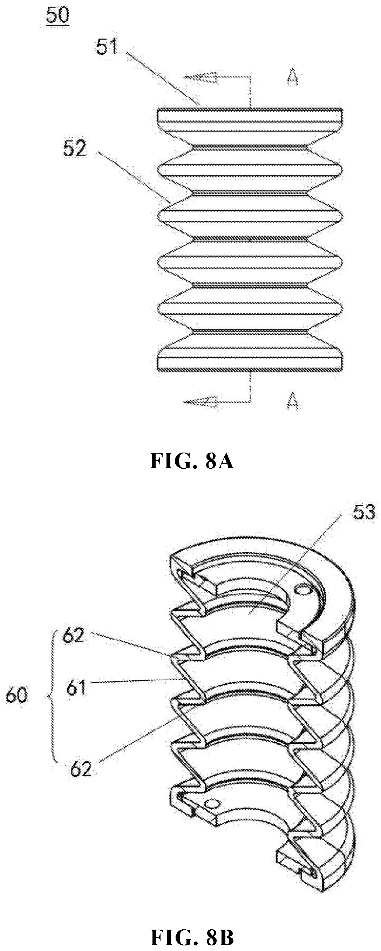

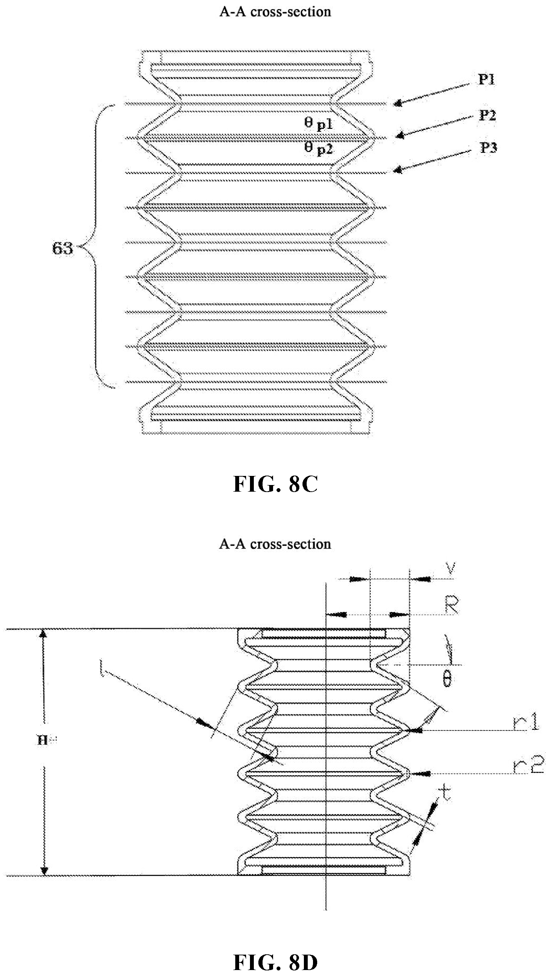

The strain unit has at least one basic shape appearing in an axial direction. In the direction of the central axis, creases 62 on spaced crease planes 63 can have the same or gradually changing shapes, the same or gradually changing sizes, and the same or gradually changing positions relative to the central axis. In some embodiments, when creases 62 on spaced crease planes 63 have the same shape, size, and position relative to the central axis, the strain unit has one basic shape that continuously appears repeatedly in the axial direction, as shown in FIG. 8A-8D; when creases 62 on spaced crease planes 63 have gradually changing shapes, sizes, and/or positions relative to the central axis, the basic shape of the strain unit may be varying, and thus may have two or more basic shapes that continuously appear repeatedly in the axial direction. In some embodiments, in the direction of the central axis, creases 62 on adjacent crease planes 63 have different convex-concave states on the flexible side wall 52.

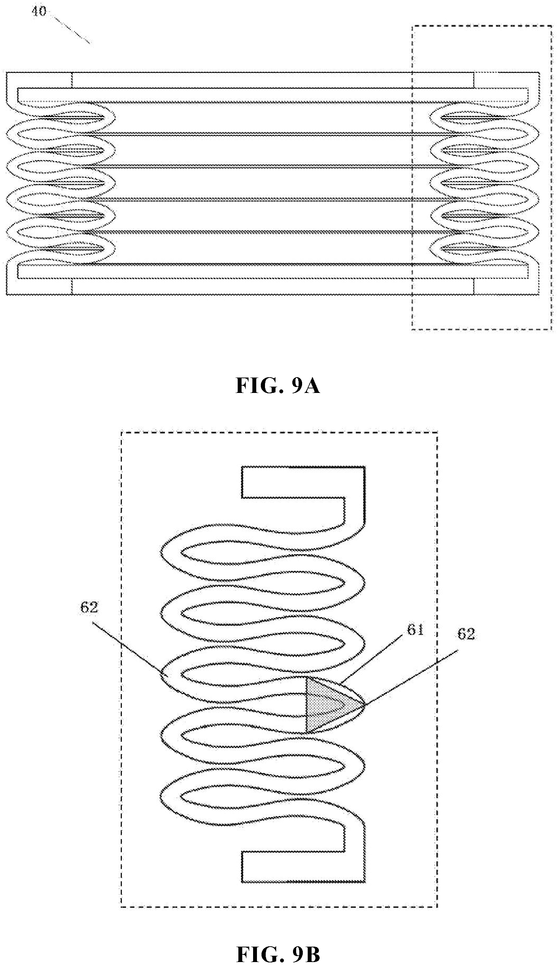

The protruding crease 62 has a closed shape with curvature G1 continuity or curvature G2 continuity on a cross-section perpendicular to the central axis, to reduce the degree of stress and/or strain concentration locally in the circumferential direction. G1 continuity is tangent continuity, meaning the surface or curve is continuous at every point, and all connected line segments or surface patches are tangent to each other. Determination method for G1 continuity: the curve is continuous, smooth without sharp corners; the surface is continuous without ridges. G2 continuity is curvature continuity, meaning the surface or curve is continuous at every point, and its curvature analysis results show continuous changes. Determination method for G2 continuity: perform curvature analysis on the curve; the curvature curve is continuous without breaks. FIG. 8A-8D and FIG. 9A-9B use a circular closed shape as an example to illustrate the structure of the stacked structure fluid actuator 50; however, it can be understood that the closed shape can also include any other suitable shapes, and the following description regarding FIG. 8A-8D and FIG. 9A-9B also applies to soft muscles with these cross-sectional shapes. For example, the closed shape can include a curve with continuously changing curvature and the curvature being G2 continuous, such as a circle and an ellipse. The closed shape can include at least two of the following adjacent segments: a straight line, a circular arc, a curve segment with varying curvature, and the curvature is G1 continuous, such as a sector ring shape and a racetrack shape. The closed shape can include a curve convex relative to the geometric center of the closed shape and a curve concave relative to the geometric center of the closed shape, such as a sector ring shape. The closed shape can be an axisymmetric figure; the closed shape can be a centrally symmetric figure; or the closed shape can be a rotationally symmetric figure, etc.

As described above, the drive source interface 53 is provided on the flexible side wall 52 or on an end face 51. The drive source interface 53 is used to change the pressure difference $\Delta P$ between inside and outside of the cavity and cause the strain-uniformly-distributed stacked structure to compress or extend to drive the end face 51 of the stacked structure fluid actuator 50 to move. When the drive source adopts a fluid form, the drive source interface 53 can be configured as an opening for fluid to enter or exit. By causing fluid to enter or exit the cavity through the opening, the pressure difference $\Delta P$ between inside and outside of the cavity of the stacked structure fluid actuator 50 is changed, driving the stacked structure fluid actuator 50 to deform. The drive source can also adopt an electrically controlled form, i.e., the drive source interface 53 is electrically connected to an external electric drive device to change the pressure difference $\Delta P$ between inside and outside of the cavity in an electric form. Or a chemical reaction form can be used to provide driving force. The pressure difference $\Delta P$ is basically linearly related to the output force of the end face 51 of the stacked structure fluid actuator 50.

During the bending or extending/contracting process of the stacked structure fluid actuator 50, it mainly involves folding of the folding face 61, while the area change of the stacked structure fluid actuator 50 itself can be very small. In other words, the energy of the fluid entering the cavity can be mainly used to cause the strain-uniformly-distributed stacked structure to bend or extend/contract, and the strain of the strain-uniformly-distributed stacked structure itself can therefore be very small (the strain generated during its deformation process is always within the elastic deformation range of the material and is less than 20%, 15%, 10%, 5% or 1%; for convenience of description, this characteristic is named small strain). In some embodiments, the internal stress of the strain-uniformly-distributed stacked structure itself is very small, so only a small proportion of the mechanical energy of the fluid is used to overcome the stress generated by the deformation of the strain-uniformly-distributed stacked structure itself, and most of the mechanical energy of the fluid can be reversibly converted into elastic potential energy during the reciprocating stretch-compression motion of the stacked structure fluid actuator 50 and released as mechanical energy of the muscle during the opposite direction change process. Therefore, the energy conversion efficiency of this stacked structure fluid actuator 50 is high. In some embodiments, during the deformation process of the stacked structure fluid actuator 50, small strain can be uniformly distributed over the entire folding face 61, making the stacked structure fluid actuator 50 of the present disclosure, compared to other existing soft muscles, able to withstand greater loads or lateral disturbing forces, output greater force while maintaining its own shape stability, withstand more cycles of compression and extension, and have a longer service life.

Thin solid lines P1 to P3 respectively represent any three consecutive crease planes 63 among the multiple crease planes of the stacked structure fluid actuator 50. The contour of the crease on crease plane P1 projected onto crease plane P2 does not intersect with the contour of the crease of crease plane P2 itself, i.e., the closed curve formed by the crease corresponding to crease plane P2 contains the closed curve formed by the crease corresponding to crease plane P1 inside. In some embodiments, the closed curve formed by the crease corresponding to crease plane P1 coincides with the closed curve formed by the crease corresponding to crease plane P3.

There can be two folding faces 61 that are symmetric about crease plane P2 between crease planes P1 and P3. The intrusion angles of these two folding faces 61 relative to crease plane P2 can be $\theta p1$ and $\theta p2$, respectively. When the total amount of fluid (which can be gas or liquid) inside the cavity increases, the stacked structure fluid actuator 50 extends until the pressure difference between inside and outside the cavity, the load acting on the end face 51 of the stacked structure fluid actuator 50, and the internal stress of the stacked structure fluid actuator 50 itself reach a new balance, at which point the stacked structure fluid actuator 50 stops deforming. Conversely, when the total amount of fluid inside the cavity decreases, the stacked structure fluid actuator 50 compresses until the pressure difference between inside and outside the cavity, the load acting on the end face 51 of the stacked structure fluid actuator 50, and the internal stress of the stacked structure fluid actuator 50 itself reach a new balance, at which point the stacked structure fluid actuator 50 stops deforming. During the entire deformation process, the two angles $\theta p1$ and $\theta p2$ synchronously become larger or smaller and can basically remain the same. It can be understood that in some embodiments, an increase in the total amount of fluid inside the cavity does not necessarily mean that the stacked structure fluid actuator 50 will be in an extended state; it may also be in a compressed state under the action of the end face load. That is, the stacked structure fluid actuator 50 is in force balance under the combined action of the resultant force of the internal and external pressure difference acting on the flexible side wall, the end face load, and the internal stress of the muscle itself.

FIG. 8A-8B shows S-plane cross-sectional views of the stacked structure fluid actuator 50 compressed to its minimum height. As shown, during the shortening process of the stacked structure fluid actuator 50, creases 62 of the strain units of the stacked structure fluid actuator 50 approach each other, and folding faces 61 of the strain units move, bend, and come close to each other. Thus, the folding face 61 of each strain unit deforms as a wavy shape on the S-plane cross-section. The wavy shape of the folding face 61 of each strain unit after deformation includes a wave peak and a wave trough. In some embodiments, the wavy shape includes one wave peak and one wave trough respectively close to the creases 62 at two ends of the folding face 61.

In some embodiments, wavy deformations of two axially adjacent strain units are mirror-symmetric to each other in a direction perpendicular to the central axis. The wave peak of one strain unit of two axially adjacent strain units and the wave trough of the other strain unit correspond in the direction along the central axis, thereby the two axially adjacent strain units maintain an axial distance at this wave peak and wave trough without approaching each other and form an arcuate gap. In some embodiments, adjacent strain units in the axial direction maintain an axial distance (the side length of the triangle shown) without continuing to approach each other at an ideal radial position (e.g., at l/4, 1/3 from the radial outer end of the crease 62). Thereby, the folding faces 61 of the adjacent strain units in the axial direction form a stable microstructure close to a triangle near the crease 62. This stable microstructure close to a triangle allows the stacked structure fluid actuator 50 to maintain its basic shape, undergoing only extension/contraction and/or bending in the axial direction without irregular deformations such as collapse and twisting, so that the stacked structure fluid actuator 50 has better shape stability. The desired working state of the stacked structure fluid actuator 50 of the present disclosure is that the side wall of the stacked structure folds/extends, the actuator extends/contracts/bends, and each crease plane uniformly approaches or deflects along the central axis. In contrast, irregular or harmful deformations such as twisting refer to at least one of the following: 1. Crease deformation; 2. Crease plane bending; 3. Uneven distance or angle between crease planes; 4. At least one crease shifts in a direction perpendicular to the central axis or deflects with a significantly different distance or angle from other creases. In some embodiments, to achieve a distance between the wave peak and the radial outer end of the crease close to l/3-l/4, t can be configured to satisfy the following relational expression: $t=ml$, $0.07 < m < 0.3$. In some embodiments, on the S-plane cross-section, a point-to-point straight-line distance from a wave peak of a strain unit to the radial outer end of the crease can be set to be greater than 0.25l.

The above embodiments are only used to illustrate the technical solutions of the present disclosure and are not intended to limit them. Although the present disclosure has been described in detail with reference to the foregoing embodiments, those of ordinary skill in the art should understand that they can still modify the technical solutions recorded in the foregoing embodiments or equivalently replace some of the technical features. These modifications or replacements do not cause the essence of the corresponding technical solutions to depart from the spirit and scope of the technical solutions of the embodiments of the present disclosure and should be included within the protection scope of the present disclosure.

**Claims**

1. An aerial operation system, comprising: an aircraft (10), an aerial operation device (30), and a dynamic disturbance adjustment mechanism (20) provided between the aircraft (10) and the aerial operation device (30);
   wherein the dynamic disturbance adjustment mechanism (20) is configured to adjust dynamic disturbance of the aerial operation device (30), and the dynamic disturbance is generated due to a relative position change between a first center of mass of the aerial operation device (30) and a second center of mass of the aircraft (10).

2. The aerial operation system according to claim 1, wherein the aerial operation device (30) comprises a stationary state and an adjustment state, wherein in the stationary state, the first center of mass is disposed close to the second center of mass of the aircraft (10), and in the adjustment state, the dynamic disturbance of the aerial operation device (30) is adjusted by the dynamic disturbance adjustment mechanism (20);

wherein the aerial operation system is configured such that:

in the stationary state, a middle portion of the aerial operation device (30) is fixedly provided on a belly mounting area of the aircraft (10) via the dynamic disturbance adjustment mechanism (20), so that the first center of mass is disposed close to the second center of mass of the aircraft (10), an operation end of the aerial operation device (30) extends beyond a rotor coverage range of the aircraft (10), and a non-operation end opposite to the operation end of the aerial operation device (30) achieves gravitational balance with the operation end through a lever principle, to prevent the first center of mass from moving away from the second center of mass and affecting flight control of the aircraft (10), wherein, in the stationary state, the first center of mass and the second center of mass are located on a same longitudinal axis;
in the adjustment state, when the aircraft (10) flies in linkage with the aerial operation device (30), a relative position change between the first center of mass and the second center of mass is caused, thus generating the dynamic disturbance, and the dynamic disturbance adjustment mechanism (20) can adjust a linkage state of the aerial operation device (30) to reduce impact of the dynamic disturbance on the flight control of the aircraft (10); and/or, when the aircraft (10) hovers and the aerial operation device (30) performs an operation, a reverse force in an operation direction can be generated, affecting the flight control of the aircraft (10), and the dynamic disturbance adjustment mechanism (20) can adjust transmission degree of the reverse force, thereby achieving stable aerial operation of the aerial operation system.

3. The aerial operation system according to claim 2, wherein the dynamic disturbance adjustment mechanism (20) comprises:

a first end plate (21), connected to the aircraft (10);

a second end plate (22), connected to the middle portion of the aerial operation device (30);
a fluid actuator (23), with two ends respectively connected to the first end plate (21) and the second end plate (22); and
a rotational support structure (24), connected between the first end plate (21) and the second end plate (22);
wherein the dynamic disturbance adjustment mechanism (20) is configured such that:

when the aircraft (10) flies in linkage with the aerial operation device (30), based on an external pressure borne by the fluid actuator (23), an internal air pressure of the fluid actuator (23) can be accordingly adjusted to maintain a balanced state between the aerial operation device (30) and the aircraft (10), thereby reducing the dynamic disturbance; wherein the external pressure is an inertial pressure generated by the aerial operation device (30) on the second end plate (22) due to the dynamic disturbance; and/or,
when the aircraft (10) hovers and the aerial operation device (30) performs an operation, based on a passive compliance of the fluid actuator (23) itself, the reverse force in the operation direction is passively absorbed.

4. The aerial operation system according to claim 3, wherein the fluid actuator (23) is a stacked structure fluid actuator (50); wherein the stacked structure fluid actuator (50) comprises two end faces (51), a flexible side wall (52) and a drive source interface (53), wherein the flexible side wall (52) and the two end faces (51) enclose to form a tubular cavity having a central axis, wherein the flexible side wall (52) is designed as or comprises a strain-uniformly-distributed stacked structure capable of extending/contracting and/or bending along a direction of the central axis, wherein the strain-uniformly-distributed stacked structure is formed by stacking two or more strain-uniformly-distributed stacked layers (60) along the central axis, so that strain of the entire flexible side wall (52) is uniformly distributed among the respective strain-uniformly-distributed stacked layers (60), wherein the strain-uniformly-distributed stacked layer (60) is designed as or comprises a strain unit having a folding face (61) and a crease (62), based on a combination of shape, thickness, and stacking manner of the strain unit, during a process of the flexible side wall (52) extending/contracting and/or bending along the direction of the central axis, strain of the strain unit is uniformly distributed on the folding face (61) and not concentrated at the crease (62), wherein the drive source interface (53) is provided on the flexible side wall (52) or on an end face (51), and is used to change a pressure difference between inside and outside of the cavity and cause the strain-uniformly-distributed stacked structure to compress or extend to drive the end face (51) of the stacked structure fluid actuator (50) to move, wherein the strain-uniformly-distributed stacked layer (60) is formed by enclosing a single folding face (61), wherein a connection between folding faces (61) of two adjacent strain-uniformly-distributed stacked layers (60) forms a crease (62), the crease (62) is located in a crease plane (63) perpendicular to the central axis, and in an initial state the crease plane (63) is planar;

wherein the strain unit has an intrusion angle $\theta$, an intrusion depth coefficient a, a folding face width I and a wall thickness t, wherein, the intrusion angle $\theta$, the intrusion depth coefficient a, the folding face width 1 and the wall thickness t are all defined based on a cross-section of the strain unit cut by an S-plane, wherein the intrusion angle $\theta$ is an angle between the folding face (61) and an adjacent crease plane (63), the intrusion angle $\theta$ varies with compression or extension of the strain-uniformly-distributed stacked structure, wherein the folding face width 1 is a width of the folding face (61) from a radial outer side of a protruding crease (62) to a radial inner side of a recessed crease (62), wherein a projection of the folding face width I in a direction perpendicular to the central axis is defined as an intrusion depth v, the intrusion depth coefficient a is a proportional relationship between the intrusion depth v and an equivalent radius R of the protruding crease (62), wherein the wall thickness t is a thickness of the flexible side wall (52), wherein the intrusion angle $\theta$, the intrusion depth coefficient a, the folding face width 1, and the wall thickness t are numerically interrelated and have a defined combination of values, such that during a deformation process of the stacked structure fluid actuator (50), the flexible side wall (52) only undergoes folding and/or extending of the strain-uniformly-distributed stacked structure, and strain of the flexible side wall (52) is uniformly distributed among the respective folding faces (61) and not concentrated at the creases (62);

wherein the strain unit has at least one basic shape appearing in an axial direction, and creases (62) on adjacent crease planes (63) have different convex-concave states on the flexible side wall (52), the protruding crease (62) has a closed shape with curvature G1 continuity or curvature G2 continuity on a cross-section perpendicular to the central axis;

wherein the stacked structure fluid actuator (50) in an initial state has an initial intrusion angle $\theta$p and an initial height Hp, and during a process of compression and/or extension within an effective working range of the strain-uniformly-distributed stacked structure, the intrusion angle $\theta$ varies between 0° and a maximum intrusion angle $\theta$max, a height H of the stacked structure fluid actuator (50) varies between a minimum height Hmin and a maximum height Hmax, and the crease (62) only moves along the central axis with the crease plane (63) without deformation;

wherein during a shortening process of the stacked structure fluid actuator (50), the folding face (61) of each strain unit of the stacked structure fluid actuator (50) deforms in a wavy shape on an S-plane cross-section, and the wavy shape of the folding face (61) of each strain unit after deformation comprises a wave peak and a wave trough.

5. The aerial operation system according to claim 4, wherein, in order to optimize a compression ratio, shape stability, and service life of the stacked structure fluid actuator (50) while ensuring uniform strain distribution within a single strain unit, a combination of values for the initial intrusion angle $\theta$p and the intrusion depth coefficient a under different working conditions is limited by a value range of $\sigma$k in an area change rate formula $\sigma k=a(1-\cos\theta p)/(2\cos\theta p-a)$ of the stacked structure fluid actuator (50), and on the S-plane, a point-to-point straight-line distance from a wave peak of the single strain unit to an outer end of the crease (62) is greater than 0.251.

6. The aerial operation system according to claim 5, wherein, within the effective working range, a pressure difference between inside the cavity of the stacked structure fluid actuator (50) and an external environment varies due to variations in volume and/or pressure of a driving fluid and causes a volume change of the cavity of the stacked structure fluid actuator (50), wherein the volume change of the cavity is mainly reflected in extension/contraction and bending along the direction of the central axis, thereby driving relative movement of two ends of the stacked structure fluid actuator (50); when the pressure difference varies in a range of -0.1MPa to 0.2MPa, the minimum height of the stacked structure fluid actuator (50) meets 0.2Hp < Hmin < 0.4Hp, the maximum intrusion angle $\theta$max < 45°, and the maximum height Hmax > 1.5Hp, the stacked structure fluid actuator (50) can have a service life of more than 3 million cycles of extension and contraction due to strain-uniform distribution characteristic; when a working pressure difference range of the stacked structure fluid actuator (50) is within -0.08Mpa to 0.2Mpa, 0.02 < $\sigma$k < 0.1, 0.25 < a < 0.55; a material for forming the flexible side wall (52) satisfies: tensile strength greater than 12 MPa, Shore hardness greater than 80, resilience greater than 30%.

7. The aerial operation system according to any one of claims 1 to 6, wherein the aerial operation device (30) comprises:

> a first long rod (31);
> a spraying execution assembly (32), provided at one end of the first long rod (31), the spraying execution assembly (32) being used for performing a spraying operation on a high-elevation facade;
> an electric control box (33), provided at the other end of the first long rod (31), the electric control box (33) being used for installing an electrical control component for controlling operation of the spraying execution assembly (32) and/or the dynamic disturbance adjustment mechanism (20), and the electric control box (33) being provided with an accommodating cavity (331) for accommodating a liquid storage pot (332), a top end of the electric control box (33) being connected to the second end plate (22); and
> the liquid storage pot (332), provided within the accommodating cavity (331), the liquid storage pot (332) being connected to the spraying execution assembly (32) via a connection tube (34).

8. The aerial operation system according to claim 7, wherein the spraying execution assembly (32) comprises a spraying head (322), a rigid variable bending flow channel (37) and a first rotation assembly (40), wherein the rigid variable bending flow channel (37) is connected between the spraying head (322) and the connection tube (34), and the rigid variable bending flow channel (37) comprises a first variable segment (371) having a first inlet end (3711) and a first outlet end (3712), wherein the first inlet end (3711) and the first outlet end (3712) are arranged at an angle, wherein the first rotation assembly (40) is configured to drive the first variable segment (371) to rotate, with a rotation axis parallel to an axis of the first inlet end (3711).

9. The aerial operation system according to claim 8, wherein the first rotation assembly (40) is provided on the electric control box (33) or the first long rod (31), wherein the first rotation assembly (40) connects the first inlet end (3711) and a terminal end of the connection tube (34) via a first transmission member, thereby driving the first variable segment (371) to rotate about the axis of the first inlet end (3711); wherein the first transmission member comprises one of a pull cable, a belt, and a timing belt.

10. The aerial operation system according to claim 8 or 9, wherein the spraying execution assembly (32) further comprises a second rotation assembly (80), wherein the rigid variable bending flow channel (37) further comprises a second variable segment (372) having a second inlet end (3721) and a second outlet end (3722), wherein the second inlet end (3721) and the second outlet end (3722) are arranged at an angle, wherein the second rotation assembly (80) is configured to drive the second variable segment (372) to rotate, with a rotation axis parallel to an axis of the second inlet end (3721); wherein the first inlet end (3711) is rotatably connected to the terminal end of the connection tube (34), the first outlet end (3712) is coaxially and rotatably connected to the second inlet end (3721), and the second outlet end (3722) is connected to the spraying head.

11. The aerial operation system according to claim 10, wherein a rotation direction of the first rotation assembly (40) is a vertical direction, and a rotation direction of the second rotation assembly (80) is a horizontal direction; or, the rotation direction of the first rotation assembly (40) is the horizontal direction, and the rotation direction of the second rotation assembly (80) is the vertical direction.

12. The aerial operation system according to claim 10 or 11, wherein the spraying execution assembly (32) further comprises a mounting base (38), wherein the mounting base (38) is connected to the connection tube (34), and the terminal end of the connection tube (34) passes through one end of the mounting base (38); wherein two ends of the first long rod (31) are respectively connected to the electric control box (33) and the mounting base (38); wherein the mounting base (38) has oppositely arranged fixed ends (381) and a connection end (382) connecting the two fixed ends (381), wherein an installation space is formed between the two fixed ends (381), and the connection end (382) is provided with a support portion (383) located within the installation space;

> wherein the first rotation assembly (40) comprises a first servomotor (41), wherein the first inlet end (3711) and the terminal end of the connection tube (34) are rotatably connected at the support portion (383), wherein the first servomotor (41) is provided on the fixed end (381) away from the connection tube (34), and a rotation shaft of the first servomotor (41) is coaxially arranged with the first inlet end (3711); wherein the first servomotor (41) is connected to the electric control box (33) via a first wire, the first wire is laid along the first long rod (31) and the mounting base (38), and the first servomotor (41) is used to control the first variable segment (371) to rotate in a perpendicular direction; wherein the fixed end (381) provided with the first servomotor (41) is further rotatably provided with a mounting frame (39), the mounting frame (39) rotates following rotation of the first variable segment (371), wherein the first variable segment (371) is fixedly connected to the mounting frame (39), and the second variable segment (372) is rotatably connected or in clearance fit with the mounting frame (39), wherein the mounting frame (39) has two angled internal cavities, each internal cavity respectively envelops different angled portions of the first variable segment (371); wherein the second rotation assembly (80) comprises a second servomotor (800), the second servomotor (800) is connected to the mounting frame (39) and is connected to the electric control box (33) via a second wire, wherein the second wire is provided inside the first long rod (31), the mounting base (38), and the mounting frame (39), wherein the second servomotor (800) is used to control rotation of the second variable segment (372), a rotation direction of the second variable segment (372) is perpendicular to a rotation direction of the first variable segment (371); wherein the first rotation assembly (40) comprises a wire winding guard plate (42), the wire winding guard plate (42) is provided at a position corresponding to the first servomotor (41), and provides a winding space for the first wire to prevent the first wire from interference and resulting in squeezing damage during rotation.

13. The aerial operation system according to claim 12, wherein the fixed end (381) is provided with an arcuate positioning groove (3810), the arcuate positioning groove (3810) is located on one side of the fixed end (381) close to the installation space, wherein the mounting frame (39) is provided with a positioning protrusion (391) extending toward the arcuate positioning groove (3810), and the wire winding guard plate (42) is provided inside the fixed end (381) between the first servomotor (41) and the positioning protrusion (391).

14. The aerial operation system according to any one of claims 10 to 13, wherein the electric control box (33) further comprises a first control module for controlling the first rotation assembly (40) and/or the second rotation assembly (80) to control an angle and a relative position between the aircraft (10) and the spraying head (322), and a second control module for controlling activation and deactivation of the spraying execution assembly (32); wherein the first control module is electrically connected to the first rotation assembly (40) and/or the second rotation assembly (80), and the second control module is electrically connected to the spraying execution assembly (32);

wherein an interface for connecting to a power supply and communication of the aircraft (10) is further provided above the electric control box (33), and is connected to the electric control box (33) via a wire, to enable convenient adaptation to the aircraft (10) through mechanical, power supply, communication, and software control interfaces; wherein the electric control box (33) is provided with an indicator light (13) to display a connection status between the aerial operation system and a control system of the aircraft (10).

15. The aerial operation system according to any one of claims 10 to 14, wherein the system further comprises a vision module (70) provided on the electric control box (33), and the vision module (70) is used for acquiring in real-time relative position information between a target spraying surface of an object to be sprayed (90) and the aircraft (10), and transmitting the relative position information to the first control module and the second control module; wherein the first control module controls the first rotation assembly (40) and the second rotation assembly (80) to rotate corresponding angles based on the relative position information, to move the spraying head (322) to a preset position, and then the second control module activates the spraying execution assembly (32) to spray the target spraying surface of the object to be sprayed (90); wherein a mounting part (11) is provided at a lens of the vision module (70), and a detachable lens protective sheet (12) is arranged on the mounting part (11) to prevent spray liquid droplets from contaminating the lens of the vision module (70) during a spraying operation.

16. The aerial operation system according to any one of claims 7 to 15, wherein the aerial operation system is used for automatically spraying an object to be sprayed (90) to cover all surfaces of the object to be sprayed (90), wherein at least one side surface of the object to be sprayed (90) has an obstacle (91) and at least one side surface of the object to be sprayed (90) has no obstacle (91), and a distance between the obstacle (91) located on any side surface of the object to be sprayed (90) and the object to be sprayed (90) is 0.5 m to 1 m.

17. The aerial operation system according to claim 16, wherein the aerial operation system is used for automatically spraying the object to be sprayed (90) to cover all surfaces of the object to be sprayed (90),

wherein only one side surface of the object to be sprayed (90) has no obstacle (91);

and/or, a spraying distance of the spraying head (322) is 0.5 m to 1 m, and a spray fan angle of the spraying head (322) is 20° to 90°;

and/or, a straight-line distance between the spraying head (322) and a blade of the aircraft (10) is 0.5 m to 0.8 m;

or, the spraying head (322) has an atomization function and an aperture of the spraying head (322) is less than or equal to 1.5 mm, and a spray fan angle of the spraying head (322) is 0° to 30°.

18. The aerial operation system according to any one of claims 7 to 17, wherein a longitudinal axis of the accommodating cavity (331) and a longitudinal axis of the dynamic disturbance adjustment mechanism (20) are located on a same straight line.

19. The aerial operation system according to any one of claims 7 to 18, wherein the first long rod (31) is further provided with a plurality of suspension fixing members (311); wherein one end of the connection tube (34) is connected to the liquid storage pot (332), and the other end of the connection tube (34) sequentially passes through the plurality of suspension fixing members (311) and is connected to the spraying execution assembly (32).

20. The aerial operation system according to any one of claims 1 to 6, wherein the aerial operation device (30) comprises:

a second long rod (31'), a middle portion of the second long rod (31') being connected to the second end plate (22) of the dynamic disturbance adjustment mechanism (20);

an execution component (35), provided at one end of the second long rod (31'), the execution component (35) being used for performing a contact-type operation on a high-elevation facade;

an electric control box (33), provided at the other end of the second long rod (31'), the electric control box (33) being used for installing an electrical control component for controlling operation of the execution component (35) and/or the dynamic disturbance adjustment mechanism (20); and

an adaptive segment (36), connected between the second long rod (31') and the execution component (35), the adaptive segment (36) being capable of passively deforming to buffer a force exerted on the execution component (35) at a moment of contact with the high-elevation facade, and being capable of changing a pose of the execution component (35) relative to the second long rod (31') to place the execution component (35) at an angle adapted to the high-elevation facade; wherein the adaptive segment (36) comprises an adaptive driving member (360), the adaptive driving member (360) comprises a first end wall (361), a second end wall (362) and a deformable flexible side wall (363) connected between the first end wall (361) and the second end wall (362), wherein the first end wall (361), the second end wall (362) and the flexible side wall (363) enclose to form an enclosed cavity (364) for containing a fluid.

21. The aerial operation system according to claim 20, wherein the adaptive segment (36) comprises a fixed base (365) fixedly connected to the second long rod (31'), a movable base (366) for mounting the execution component (35), and at least three adaptive driving members (360), a first end wall (361) of each adaptive driving member (360) being fixed to the fixed base (365), and a second end wall (362) of each adaptive driving member (360) being movably connected to the movable base (366).

22. The aerial operation system according to claim 21, wherein the fixed base (365) comprises a first fixed plate (3651) and a second fixed plate (3652) spaced apart, and a fixed column (3653) fixedly connecting the first fixed plate (3651) and the second fixed plate (3652); wherein the adaptive driving members (360) are provided between the first fixed plate (3651) and the second fixed plate (3652), and the first end walls (361) of the adaptive driving members (360) are fixed on and/or integrally formed with the first fixed plate (3651); wherein the adaptive segment (36) further comprises a plurality of connecting rods (367), one end of each connecting rod (367) is fixedly connected to the second end wall (362) of an adaptive driving member (360), and the other end of each connecting rod (367) is universally connected to the movable base (366), wherein the connecting rods (367) pass through the second fixed plate (3652) and are universally connected to the second fixed plate (3652);

wherein first elastic members (3671) are sleeved on the connecting rods (367), one end of each first elastic member (3671) abuts against a connection between a connecting rod (367) and the fixed base (365), and the other end of each first elastic member (3671) abuts against a connection between the connecting rod (367) and the movable base (366).

23. The aerial operation system according to claim 21 or 22, wherein the adaptive segment (36) further comprises a plurality of sensors (368), each sensor (368) is one of an air pressure sensor, an angle sensor, and a displacement sensor, the plurality of sensors (368) are used for respectively detecting parameter changes at different positions of the adaptive driving member (360) or parameter changes of multiple adaptive driving members (360).

24. The aerial operation system according to any one of claims 20 to 23, wherein the second long rod (31') comprises a first rod body (101) and a second rod body (102), wherein one end of the first rod body (101) is rotatably connected to one end of the second rod body (102), so that the second long rod (31') has a folded state and an unfolded state; wherein one end of the first rod body (101) away from the second rod body (102) is connected to the adaptive segment (36), and the second rod body (102) is connected to the dynamic disturbance adjustment mechanism (20) and the electric control box (33).

**FIG. 1**

**FIG. 2**

**FIG. 3**

**FIG. 4**

**FIG. 5**

**FIG. 6**

**FIG. 7**

**FIG. 8A**

**FIG. 8B**

A-A cross-section

**FIG. 8C**

A-A cross-section

**FIG. 8D**

**FIG. 9A**

**FIG. 9B**

**FIG. 10**

**FIG. 11**

**FIG. 12**

**FIG. 13**

**FIG. 14**

**FIG. 15**

**FIG. 16**

**FIG. 17**

**FIG. 18**

## INTERNATIONAL SEARCH REPORT

| International application No. |
| --- |
| **PCT/CN2024/105925** |

| | |
| --- | --- |
| **A. CLASSIFICATION OF SUBJECT MATTER** | |
| B64C 27/08(2023.01)i | |

According to International Patent Classification (IPC) or to both national classification and IPC

| | |
| --- | --- |
| **B. FIELDS SEARCHED** | |

Minimum documentation searched (classification system followed by classification symbols)

IPC:B64C,B25J,F16M

Documentation searched other than minimum documentation to the extent that such documents are included in the fields searched

Electronic data base consulted during the international search (name of data base and, where practicable, search terms used)

CNTXT, ENTXT, DWPI, CNKI: 无人机, 作业, 扰动, 调节, 重心, 喷涂, 杆, 流体, 致动, 堆叠, UAV, operation, work+, disturb +, adjust+, regulat+, accommodate+, center, gravity, spray+, pole, rod, stick, fluid, liquid, actuat+, stack+

| | |
| --- | --- |
| **C. DOCUMENTS CONSIDERED TO BE RELEVANT** | |

| Category* | Citation of document, with indication, where appropriate, of the relevant passages | Relevant to claim No. |
| --- | --- | --- |
| X | CN 107891975 A (COOL HIGH-TECH BEIJING CO., LTD. et al.) 10 April 2018 (2018-04-10) description, paragraphs 0002-0070, and figures 1-5 | 1 |
| Y | CN 107891975 A (COOL HIGH-TECH BEIJING CO., LTD. et al.) 10 April 2018 (2018-04-10) description, paragraphs 0002-0070, and figures 1-5 | 7 |
| Y | CN 108438227 A (SOUTHWEST JIAOTONG UNIVERSITY) 24 August 2018 (2018-08-24) description, paragraphs 0002-0063, and figures 1-4 | 7 |
| A | CN 111993427 A (HUNAN UNIVERSITY et al.) 27 November 2020 (2020-11-27) entire document | 1-24 |
| A | CN 111984024 A (FUZHOU UNIVERSITY) 24 November 2020 (2020-11-24) entire document | 1-24 |
| A | CN 113955114 A (JIANGSU UNIVERSITY) 21 January 2022 (2022-01-21) entire document | 1-24 |

☑ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 September 2024** | **21 October 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| :-- |
| **PCT/CN2024/105925** |

| C. | DOCUMENTS CONSIDERED TO BE RELEVANT | |
| :--: | :-- | :--: |
| Category* | Citation of document, with indication, where appropriate, of the relevant passages | Relevant to claim No. |
| A | WO 2021258411 A1 (JIANGSU UNIVERSITY) 30 December 2021 (2021-12-30)<br>entire document | 1-24 |

Form PCT/ISA/210 (second sheet) (July 2022)

**INTERNATIONAL SEARCH REPORT**
Information on patent family members

International application No.

**PCT/CN2024/105925**

| Patent document cited in search report | | | Publication date (day/month/year) | Patent family member(s) | Publication date (day/month/year) |
|---|---|---|---|---|---|
| CN | 107891975 | A | 10 April 2018 | None | |
| CN | 108438227 | A | 24 August 2018 | None | |
| CN | 111993427 | A | 27 November 2020 | None | |
| CN | 111984024 | A | 24 November 2020 | None | |
| CN | 113955114 | A | 21 January 2022 | None | |
| WO | 2021258411 | A1 | 30 December 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311007534
- CN 202410441781
- CN 202410574348